# EUROPEAN PATENT APPLICATION

(11) **EP 2 259 481 A2**
(43) Date of publication of application: **08.12.2010**
(21) Application number: 10005750.4
(22) Date of filing: 02.06.2010
(51) Int. Cl.: H04L 5/00

(54) **Method and apparatus for resource allocation in a wireless communication system**

(30) Priority: 05.06.2009 JP 2009135688
(71) Applicant: Hitachi, Ltd., Chiyoda-ku Tokyo 100-8280 (JP)
(72) Inventor: Katayama, Rintaro, Tokyo 100-8220 (JP); Tamaki, Satoshi, Tokyo 100-8220 (JP); Yamamoto, Tomonori, Tokyo 100-8220 (JP); Ishii, Hirotake, Tokyo 100-8220 (JP)
(74) Representative: Strehl Schübel-Hopf & Partner

(57) **Abstract**

In a system of the present invention, the amount of cell-edge band is limited. In addition, the upper limit of the amount of cell-edge band in each cell (105) is set for limiting the amount of cell-edge band based on the upper limit. The number of cell-edge MSs is also limited. In addition, the upper limit of the number of cell-edge MSs in each cell is set for limiting the number of cell-edge MSs based on the upper limit.

## Description

### BACKGROUND OF THE INVENTION

The present invention relates to a wireless communication system, for example, to a wireless communication system, a base station (BS), and a mobile station (MS) that use an OFDMA(Orthogonal Frequency Division Multiple Access) based communication method for implementing cellular communication.

OFDMA is employed in many cases as the user multiplexing method in wireless communication. In OFDMA, many subcarriers provided by the OFDM (Orthogonal Frequency Division Multiplexing) method are assigned to MSs, some subcarriers to each MS, as the frequency resources for realizing simultaneous access by multiple MSs. In the OFDMA method, the frequency resources used for data communication must be assigned before data is transmitted. For example, in a cellular wireless communication system where the OFDMA method is used, a BS decides the frequency resource assignment and notifies the frequency resource assignment information to the MSs via the dedicated control information channel.

For example, when data is transmitted on the downlink from a BS to an MS, the BS first assigns frequency resources to each MS according to the amount of data the BS is to transmit to the MS. The frequency resource assignment information is notified from the BS to the MS via the control information channel simultaneously with or before the data transmission. The BS transmits data using the frequency resources assigned to each MS. The MS, which is to receive data from the BS, checks the frequency resource assignment information, which has been notified by the BS, to determine via which frequency resources the data will be transmitted and receives the data based on the determined frequency resources.

On the other hand, when data is transmitted on the uplink from an MS to a BS, the MS first notifies a data transmission request and the transmission data amount information to the BS. The BS assigns frequency resources to each MS based on the notification such as the data transmission request received from the MS. The frequency resource assignment information is notified from the BS to the MS via the control information channel. After that, the MS checks the frequency resource assignment information, which has been notified by the BS, to determine which frequency resources are to be used for transmitting data and, based on the determined frequency resources, transmits data. The BS receives data using the frequency resources assigned to each MS.

In OFDMA, the information on the frequency resource assignment to each MS, determined by a BS, is shared by the BS and the MS as described above to carry out data communication where bandwidth allocation is performed adaptively according to the transmission data amount.

Because different frequency resources are assigned using the scheme described above in an OFDMA-based cellular wireless system, there is usually no intra-cell interference problem among the MSs communicating with the same BS. Rather, the problem is inter-cell interference that may be generated when the same or overlapping frequency resources are assigned to the MSs communicating with different BSs. To solve this problem, an OFDMA system requires a scheme for controlling inter-cell interference.

The standardization organization 3GPP has standardized an OFDMA and DFT-S(Discrete Fourier Transform-Spread)-OFDMA based wireless communication system as E-UTRA(Evolved Universal Terrestrial Radio Access) and E-UTRAN(Evolved Universal Terrestrial Radio Access Network). The inter-cell interference control scheme via frequency scheduling is discussed in 3GPP R1-075014 and 3GPP R1-081595, and the inter-BS interface X2 for supporting the inter-cell interference control is defined in 3GPP TS 36.423 V8.5.0, 8.3.1 Load Indication. Via X2, the information on the transmit power and so on is exchanged between BSs.

In X2 described above, the downlink transmit power information, called RNTP(Relative Narrowband Transmit Power Indication), is exchanged between BSs for each minimum frequency resource assignment unit called an RB(Resource Block). Each BS uses the RNTP, notified by the neighboring BSs, to know at which frequency the transmit power of the neighboring BSs is high. In general, the received interference power at an MS communicating with a BS is high at a frequency at which the transmit power of the neighboring BSs is high. In addition, an MS near the cell-edge tends to have a larger downlink received interference power than that of an MS located near the cell-center because the MS near the cell-edge is nearer to the neighboring BSs.

In X2, the information on interference to a BS on the uplink is also exchanged between the BSs as OI(Interference Overload Indication). The OI includes information on the received interference power of a BS for each RB. Also exchanged between BSs via X2 is the information on the sensitivity to interference on the uplink called HII(High Interference Indication). HII includes information on RBs that the BS does not want them to be used by cell-edge MSs in the neighboring cells. In general, an MS at the cell-edge of a BS and an MS at the cell-edge of its neighboring BS are potentially large interference sources each other.

### SUMMARY OF THE INVENTION

A BS can reduce the received interference power of an MS by assigning frequency resources, where the transmit power of the neighboring BSs is low, to a cell-edge MS that is more likely affected by interference and by assigning frequency resources, where the transmit power of the neighboring BSs is high, to a cell-center MS that is less likely affected by interference. In addition, when subcarriers to be assigned to a cell-edge MS of a BS are decided, the BS can use the information notified by HII to select subcarriers, not yet assigned to a cell-edge MS in the neighboring BSs, to reduce interference between the cell-edge MSs.

To control the inter-cell interference such as the one described above, the system bandwidth is partitioned, for example, into the cell-edge band to be allocated to MSs located at a cell edge and the cell-center band to be allocated to MSs located near the cell-center. A high transmit power is allowed in the cell-edge band while a power lower than that in the cell-edge band is used in the cell-center band.

As the amount of cell-edge band is increased when the system bandwidth is partitioned into the cell-edge band and the cell-center band, the limitation on the transmit power is reduced and, as a result, the throughput of the cell is expected to increase. An increase in the amount of cell-edge band, however, increases interference to the neighboring cells, sometimes resulting in a decrease in the throughput of the neighboring cells.

Another problem is that, as the number of cell-edge MSs is increased when the connected MSs in each cell are classified into cell-edge MSs and cell-center MSs, the cell-edge band sometimes cannot accommodate cell-edge MSs. This results in a decrease in the throughput of the cell-edge MSs.

To solve at least one of the problems described above, the amount of cell-edge band is limited in one aspect of the present invention. In addition, the upper limit of the amount of cell-edge band in each cell is set for limiting the amount of cell-edge band based on the upper limit.

To solve at least one of the problems described above, the number of cell-edge MSs is limited in another aspect. In addition, the upper limit of the number of cell-edge MSs in each cell is set for limiting the number of cell-edge MSs based on the upper limit.

The present invention prevents an increase in interference power to the neighboring cells to allow for inter-cell interference control for ensuring equal connectivity among cells, thus increasing the usage efficiency of wireless resources.

Other objects, features and advantages of the invention will become apparent from the following description of the embodiments of the invention taken in conjunction with the accompanying drawings.

### BRIEF DESCRIPTION OF THE DRAWINGS

FIG 1 is a diagram showing the configuration of a cellular wireless communication system.
FIG 2 is a sequence diagram showing the procedure for transmitting data on the downlink.
FIG 3 is a sequence diagram showing the procedure for transmitting data on the uplink.
FIG 4 is a diagram showing an example of bandwidth partitioning.
FIG 5 is a diagram showing an example of the transmit power limitation in the band portions.
FIG 6 is a diagram showing an example of the transmit power limitation in the cell-edge band and the cell-center band.
FIG 7 is a diagram showing an example of the configuration for bandwidth partitioning based on the information exchange via the inter-BS interface.
FIG 8 is a diagram showing an example of the method for bandwidth partitioning on the downlink.
FIG 9 is a diagram showing an example of the method for bandwidth partitioning on the uplink.
FIG 10 is a diagram showing an example of the method for adjusting the amount of cell-edge band.
FIG 11 is a diagram showing the upper limit setting of the amount of cell-edge band.
FIG 12 is a diagram showing an example of the procedure for deciding the upper limit amount of cell-edge band.
FIG 13 is a diagram showing a first example of the present invention.
FIG 14 is a diagram showing a second example of the present invention.
FIG 15 is a diagram showing a third example of the present invention.
FIG 16 is a diagram showing a fourth example of the present invention.
FIG 17 is a diagram showing a fifth example of the present invention.
FIG 18 is a diagram showing an example of the relation between MS locations and the classification.
FIG 19 is a diagram showing an example of the classification of MSs.
FIG 20 is a diagram showing an example of the relation between the transmit power limitation in the band portions and the classification of MSs.
FIG 21 is a diagram showing an example of the method for classifying MSs into cell-edge MSs and cell-center MSs.
FIG 22 is a diagram showing an example of the method for adjusting the number of cell-edge MSs.
FIG 23 is a diagram showing the upper limit setting of the number of cell-edge MSs.
FIG 24 is a diagram showing an example of the procedure for deciding the upper limit value of the number of cell-edge MSs.
FIG 25 is a diagram showing a sixth example of the present invention.
FIG 26 is a diagram showing a seventh example of the present invention.
FIG 27 is a diagram showing the seventh example of the present invention.
FIG 28 is a diagram showing an eighth example of the present invention.
FIG 29 is a diagram showing the eighth example of the present invention.
FIG 30 is a diagram showing a ninth example of the present invention.
FIG 31 is a diagram showing an example of the classification of MSs based on RSRP.
FIG 32 is a table showing the result of the transmit power limitation in FIG 6.
FIG 33 is a table showing the classification of MSs in FIG 20.
FIG 34 is a diagram showing an example of the configuration of a BS in this embodiment.

### DETAILED DESCRIPTION OF THE INVENTION

Although the description is divided as necessary into multiple sections or embodiments for convenience sake in the description of embodiments below, it is to be understood that the multiple sections or embodiments are not independent each other unless explicitly stated otherwise but that one is a part, or is a modification, a detailed description, or a supplementary description, of the other. In addition, when the number of elements (including the number of units, numeric value, range) is mentioned in the description of embodiments below, it is to be understood that the description is not limited to a particular number unless explicitly stated otherwise or unless apparently limited to a particular number in principle but that the number may be larger or smaller than the particular number.

In addition, it is apparent in the description of the embodiments below that the components (including element steps) are not always necessary unless explicitly stated otherwise or unless considered apparently indispensable in principle. Similarly, when the shape or the positional relation of a component is mentioned in the description of the embodiments below, it is to be understood that those substantially resembling or similar in shape are included unless otherwise stated or unless considered apparently otherwise in principle. This applies also to the numeric values or ranges described above.

An embodiment of the present invention will be described below in detail with reference to the drawings. In the drawings used for describing the embodiment, the same reference numerals denote the same structural elements and the repeated description is omitted.

The following describes in detail a cellular communication system in the embodiment of the present invention with reference to the drawings using E-UTRA and E-UTRAN as an example.

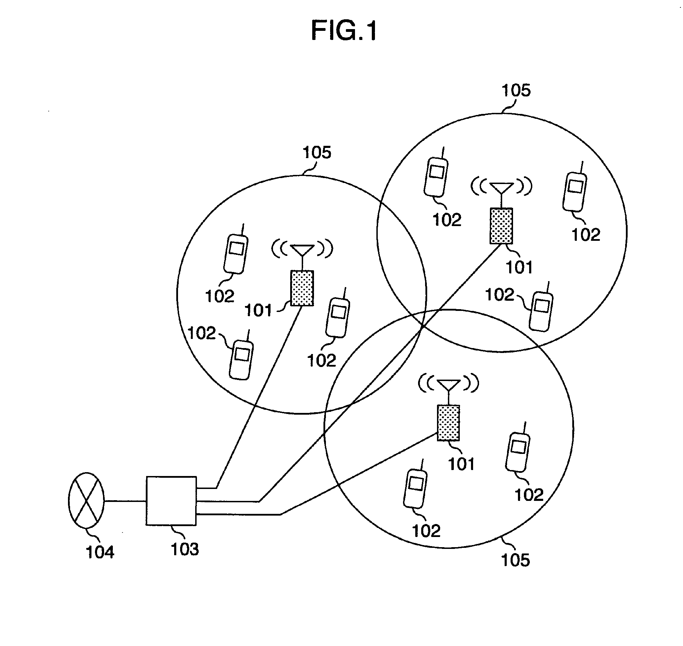

FIG 1 is a diagram showing an example of the configuration of a cellular wireless communication system that employs E-UTRA and E-UTRAN. As shown in FIG 1, the cellular wireless communication system comprises multiple base stations (BSs) and multiple mobile stations (MSs). ABS 101 is connected to a BS control device 103 via a wired line, and the BS control device 103 is connected to a network 104 via a wired line. An MS 102 is connected wirelessly to the BS 101 and is connected to the network 104 via the BS control device 103 for communication.

In the system shown in FIG 1, the BS 101 assigns frequency resources and notifies the assignment information to the MSs 102. A cell 105 indicates an approximate range in which the BS 101 and MS 102 can wirelessly communicate with each other. The inter-BS interface X2 is a logical interface and, in the example in FIG 1, the BSs exchange information on X2 with each other through a wired line via the BS control device 103. In this embodiment, the BS 101 partitions the system bandwidth into the cell-edge band and the cell-center band and, in addition, classifies the MSs into cell-edge MSs and the cell-center MSs.

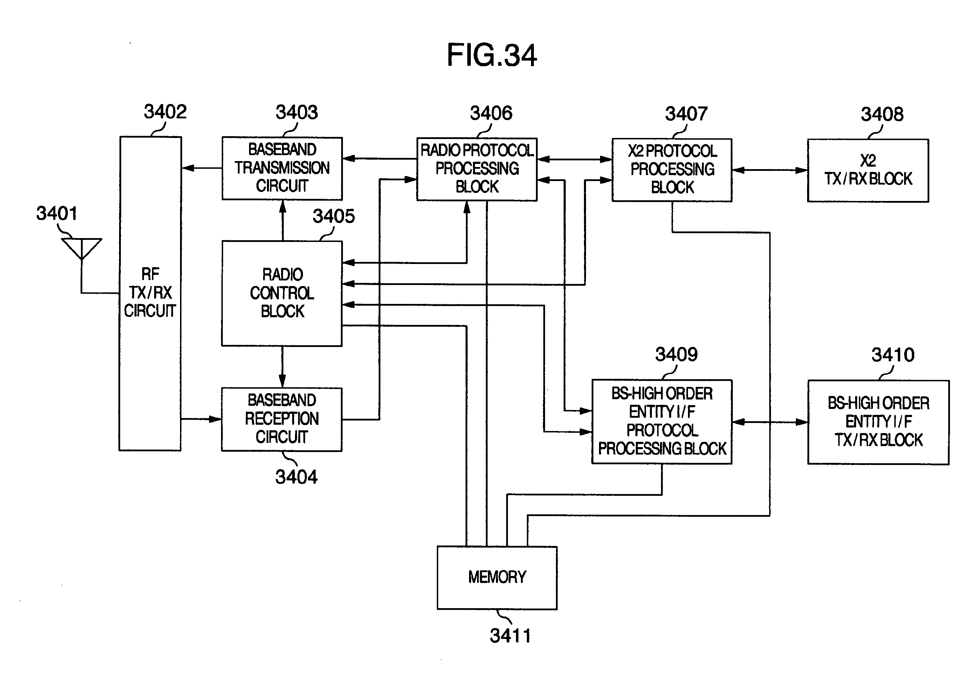

FIG 34 is a diagram showing an example of the configuration of a BS in this embodiment. In the example shown in FIG 34, the BS comprises a Tx/Rx antenna 3401 via which the RF(Radio Frequency) signal for communication with MSs is transmitted and received, an RF Tx/Rx circuit 3402 that converts the baseband signal and the RF signal or amplifies the signal power, a baseband transmission circuit 3403 that generates the baseband transmission signal, a baseband reception circuit 3404 that detects the baseband reception signal, a radio control block 3405 that performs the radio interface control such as frequency resource assignment and power control, a radio protocol processing block 3406 that processes the radio protocol, an X2 protocol processing block 3407 that processes the inter-BS interface X2, an X2 Tx/Rx block 3408 that transmits and receives the X2 signal, a BS-high order entity I/F protocol processing block 3409 that processes the interface with a high-order device, a BS-high order entity I/F Tx/Rx block 3410 that processes signals between the BS and a high-order entity, and a memory 3411. The radio control block 3405 may be a processor. The memory 3411 stores the tables that will be described later and the programs that correspond to the flowcharts.

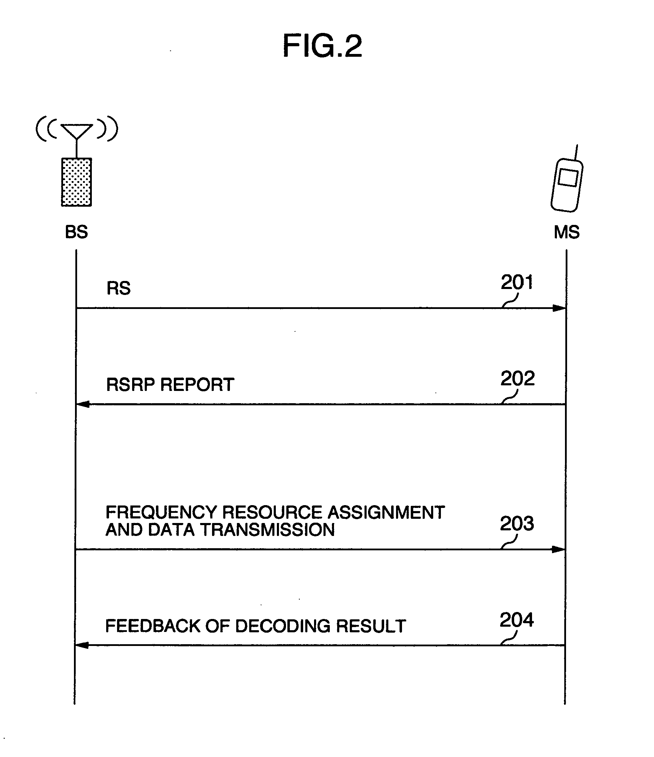

The following describes the downlink data transmission procedure with reference to FIG 2. In the example shown in FIG 2, the MSs are classified into cell-edge MSs and cell-center MSs according to RSRP(Reference Signal Received Power). FIG 2 is a sequence diagram showing an example of the downlink data transmission procedure. In sequence 201, the BS transmits the reference signal called RS(Reference Signal). The MS measures the reception intensity ofRS and notifies the measurement result to the BS as RSRP in sequence 202. The RSRP notification is transmitted via signaling in upper layer. The BS classifies the MSs into cell-edge MSs and cell-center MSs, for example, based on RSRP reported by MSs. For example, if RSRP is lower than a predetermined threshold, the BS assumes that the MS is far from the BS and determines it as a cell-edge MS and, if not, assumes that the MS is near the BS and determines it as a cell-center MS.

In principle, the BS assigns frequency resources in the band corresponding to the classification of an MS. For example, the BS assigns the frequency resources in the cell-edge band to a cell-edge MS. To a cell-center MS, the BS may assign the frequency resources in the cell-center band because the transmit power need not be high or may assign frequency resources in the cell-edge band.

In sequence 203, the BS notifies the assigned frequency resources, and transmits data, to the MS. In E-UTRA, the assigned frequency resources are notified, and data is transmitted, via the control channel PDCCH(Physical Downlink Control Channel) and the data channel PDSCH(Physical Downlink Shared Channel), respectively. The MS receives data using the frequency resources notified by the BS. In sequence 204, the MS notifies the BS whether or not the MS has successfully decoded the received data. This decoding result is notified primarily via the control channel called PUCCH(Physical Uplink Control Channel). Based on the notification of this decoding result, the BS performs processing, such as retransmission, as necessary.

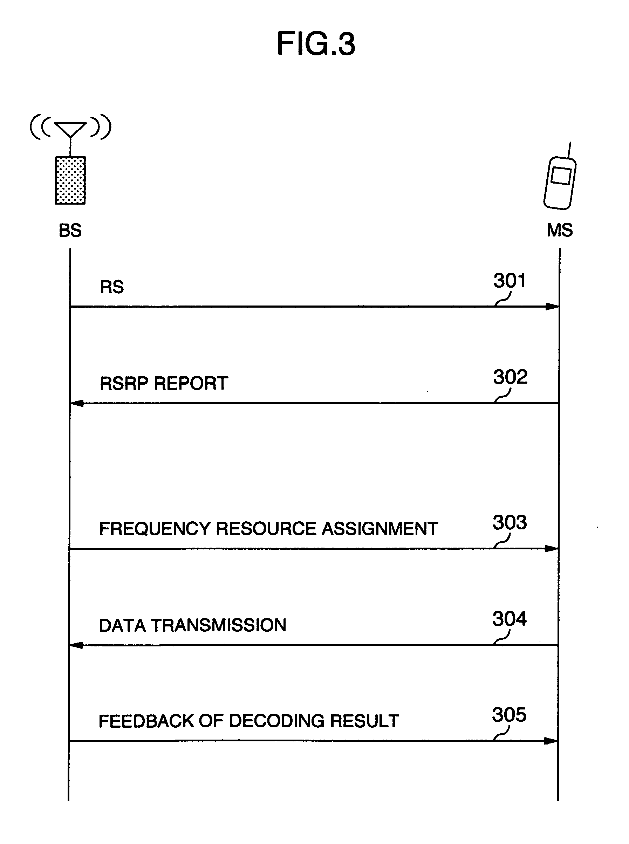

The following describes the uplink data transmission procedure with reference to FIG 3. FIG 3 is a sequence diagram showing an example of the uplink data transmission procedure. In the example shown in FIG 3, the MSs are classified into cell-edge MSs and cell-center MSs according to RSRP(Reference Signal Received Power). The RS transmission in sequence 301 and the RSRP report in sequence 302 are the same as those in FIG 2. The BS classifies the MSs into cell-edge MSs and cell-center MSs based on RSRP reported by MSs. The classification of MSs on the uplink may or may not be the same as that on the downlink.

The BS assigns frequency resources in the band corresponding to the classification of an MS. For example, the BS assigns the frequency resources in the cell-edge band to a cell-edge MS. To a cell-center MS that is near the BS, the BS may assign the frequency resources in the cell-center band because the transmit power need not be high or may assign frequency resources in the cell-edge band.

In sequence 303, the BS notifies the assigned frequency resources to the MS. In E-UTRA, the assigned frequency resources are notified via the control channel PDCCH. In sequence 304, the MS transmits data using the frequency resources notified by the BS. The data is transmitted via the data channel PUSCH(Physical Uplink Shared Channel). In sequence 305, the BS notifies the MS whether or not the BS has successfully decoded the received data. This decoding result is notified via the control channel called PHICH(Physical Hybrid-ARQ Indicator Channel). Based on the notification of this decoding result, the BS performs processing, such as indication of retransmission, as necessary.

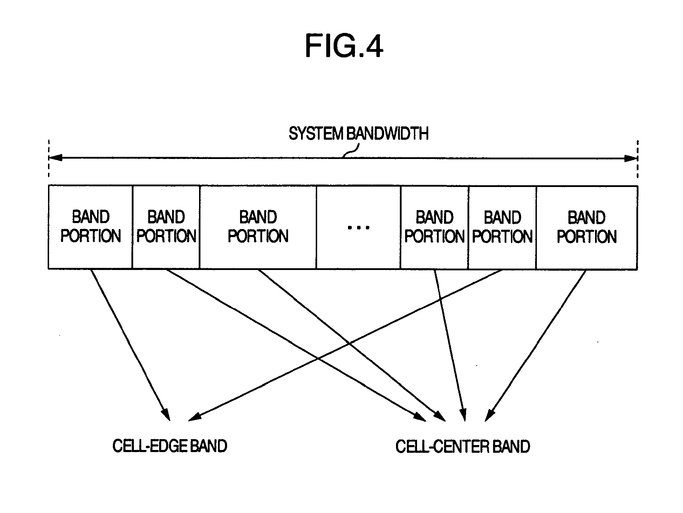

Bandwidth partitioning is performed before frequency resource assignment. FIG 4 is a diagram showing an example of bandwidth partitioning. Referring to FIG 4, the system bandwidth is partitioned into multiple band portions. Each band portion belongs to either the cell-edge band or the cell-center band.

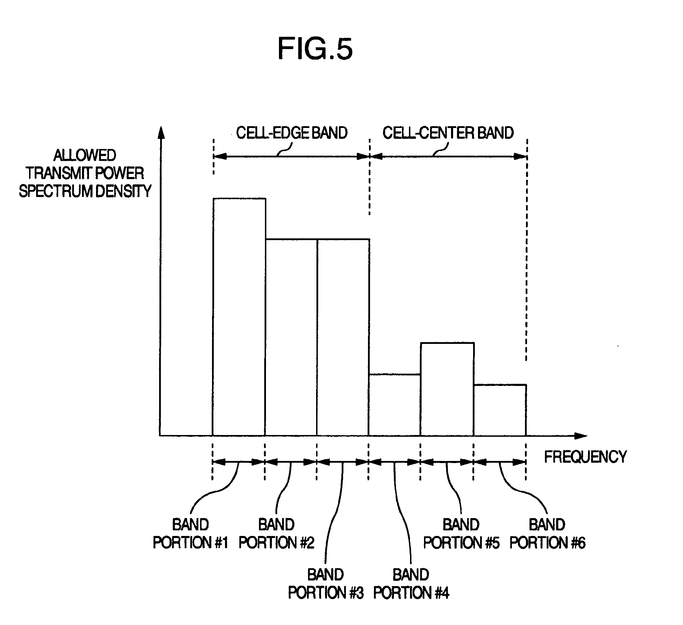

FIG 5 is a diagram showing an example of transmit power limitation in each band portion. In the example shown in FIG 5, the system bandwidth is partitioned into six band portions where band portion 1, band portion 2, and band portion 3 constitute the cell-edge band and band portion 4, band portion 5, and band portion 6 constitute the cell-center band. Although the cell-edge band and the second band portion group are each composed of consecutive band potions in FIG 5 for the sake of simplicity, they may be composed of non-consecutive band portions. In FIG 5, the maximum allowed transmit power is set for each band portion. The allowed transmit power for each band portion is set so that the allowed transmit power of a band portion belonging to the cell-edge band is higher than the allowed transmit power of a band portion belonging to the cell-center band.

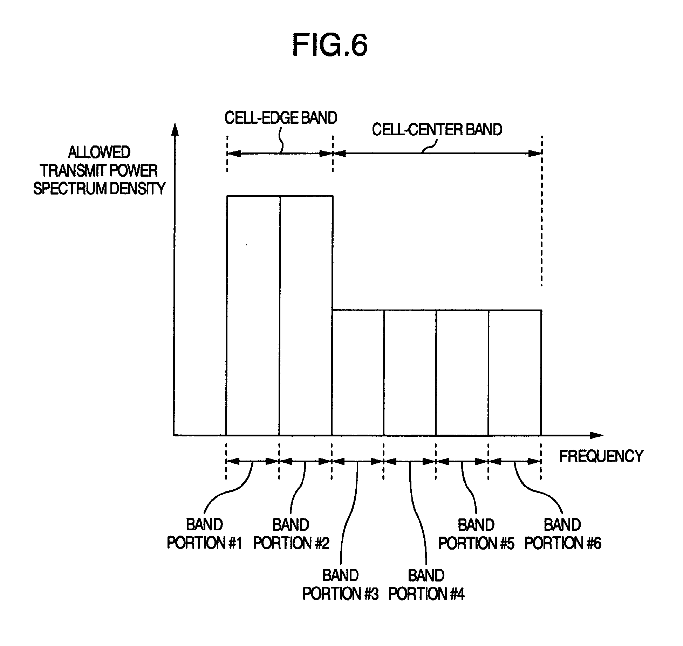

FIG 6 is a diagram showing another example of transmit power limitation in each band portion. In FIG 6, in each of the cell-edge band and the cell-center band, the allowed transmit powers of the belonging band portions are the same. For example, when the transmit power or the allowed transmit power must be notified to an MS, the reduced number of allowed transmit power values such as that shown in FIG 6 has the advantage of decreasing the overhead that would otherwise be increased when such information is notified to the MS.

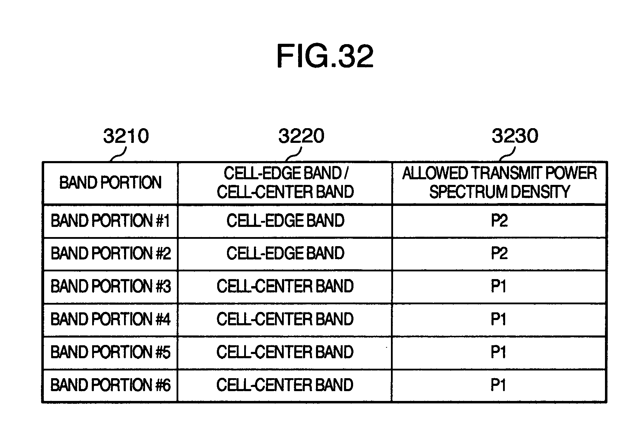

FIG 32 is a table indicating the result of the transmit power limitation in FIG 6. For each band portion 3210, the table shown in FIG 32 includes information 3220 indicating whether the band portion belongs to the cell-edge band or the cell-center band and information 3230 on the allowed transmit power value. The BS has the table, such as the one shown in FIG 32, in the memory 3411 shown in FIG 34 and uses the table when the radio control block 3405 in FIG 34 assigns frequency resources to, or set the transmit power for, an MS.

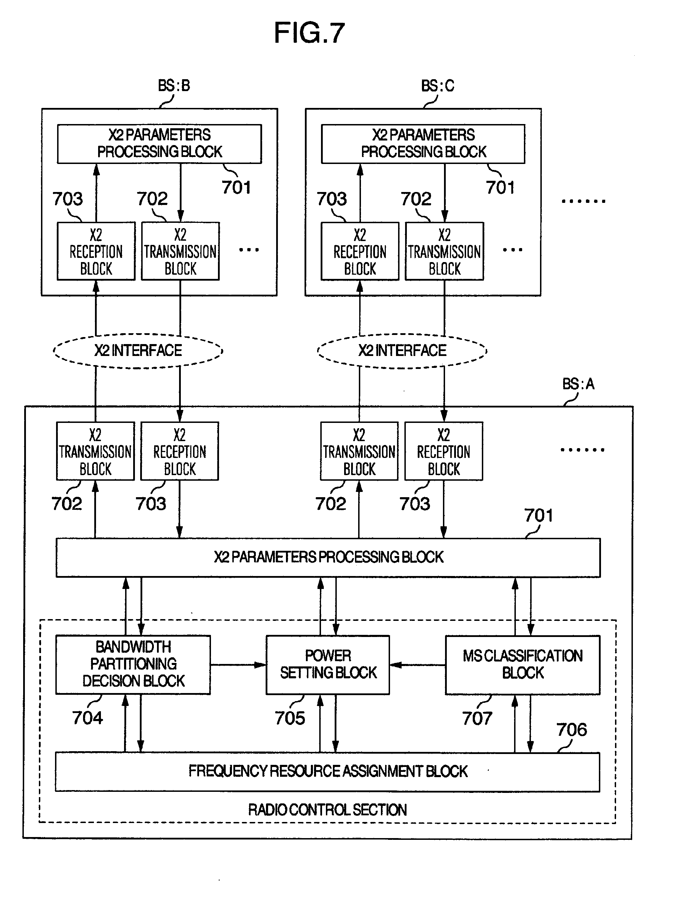

Bandwidth partitioning is performed based on the information acquired from the neighboring BSs. FIG 7 is a diagram showing an example of the configuration in which the bandwidth is partitioned based on the information on the inter-BS interface X2 in E-UTRAN. Each of BSs A, B, and C has an X2 transmission block 702 and a X2 reception block 703. Note that the interface between the BS and the MS is omitted in FIG 7 for the sake of simplicity. In addition, in FIG 7, the blocks other than the processing blocks for implementing the X2 interface are omitted in BS B and BS C for the sake of simplicity. As described above, the X2 interface in FIG 7 is logically configured. For example, in the example of the configuration shown in FIG 1, the BSs may exchange X2 parameters via the BS control device 103 through a wired line.

In order to implement the X2 interface with one or more neighboring BSs in the configuration in FIG 7, each BS comprises an X2 parameters processing block 701 for processing X2 parameters exchanged between BSs such as RNTP, HII, or OI. The X2 parameters processing block 701 generates X2 parameters and transmits the generated X2 parameters to the neighboring BSs via the X2 transmission block 702. The X2 parameters processing block 701 receives X2 parameters from the neighboring BSs via the X2 reception block 703.

In addition to the X2 reception block and the X2 parameters processing block, BS A comprises a bandwidth partitioning decision block 704, a power-setting block 705, an MS classification block 707, and a frequency resource assignment block 706. The bandwidth partitioning decision block 704 uses the X2 parameters, received from the X2 parameters processing block 701, to partition the bandwidth. The power-setting block 705 sets the allowed transmit power for the band portions generated through partitioning by the bandwidth partitioning decision block 704 and, at the same time, manages information on the transmit power determined by the frequency resource assignment information that is determined by the frequency resource assignment block 706 and is supplied to the MSs. The frequency resource assignment block 706 assigns frequency resources to the MSs based on the bandwidth partitioning information obtained from the bandwidth partitioning decision block 704, the allowed transmit power information on each band portion obtained from the power-setting block 705, and so on. The X2 parameters processing block 701 determines the X2 parameters to be transmitted to the neighboring BSs based on the resource assignment information determined by the frequency resource assignment block 706, bandwidth partitioning information decided by the bandwidth partitioning decision block 704, MS classification information decided by the MS classification block 707, transmit power information managed by the power-setting block 705, and so on. Note that the interface between the BS and the MSs is omitted in FIG 7.

The bandwidth partitioning may be the same or different between the downlink and the uplink. On the downlink, the bandwidth may be partitioned based on RNTP notified by the neighboring BSs, for example, as shown by sequence 202 in FIG 2. On the uplink, the bandwidth may be partitioned based on OI and HII notified by the neighboring BSs, for example, as shown by sequence 302 in FIG 3.

The radio control block 3405 shown in FIG 34 may call the programs, stored in the memory 3411, to perform the processing corresponding to the bandwidth partitioning decision block 704, power-setting block 705, frequency resource assignment block 706, and MS classification block 707.

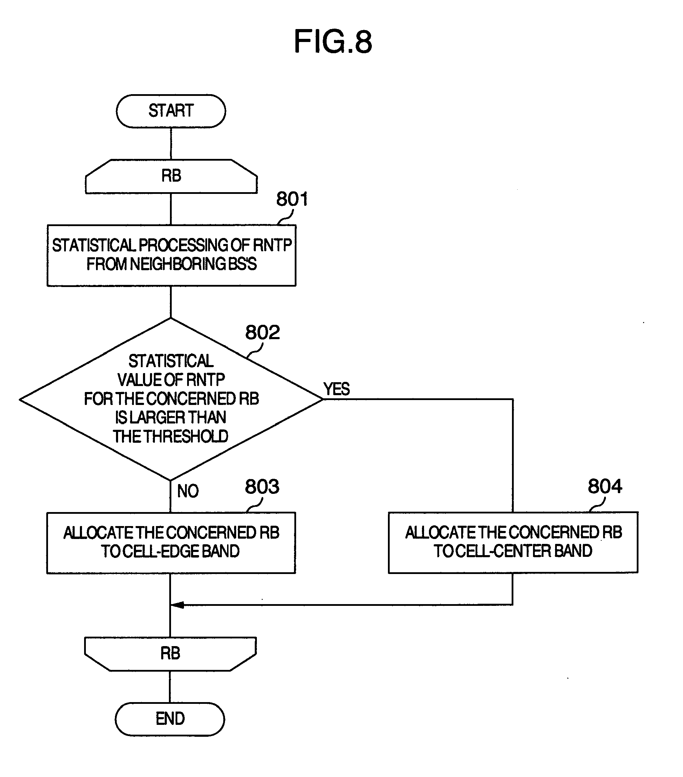

The following describes an actual example of the bandwidth partitioning method on a downlink with reference to FIG 8. FIG 8 is a flowchart showing an example of the bandwidth partitioning procedure based on the downlink transmit power information obtained from the neighboring BSs. In the example shown in FIG 8, RNTP defined in E-UTRAN is used as the downlink transmit power information. In the example shown in FIG 8, the bandwidth is partitioned by determining if an RB(Resource Block), the minimum unit of frequency resource assignment, is a cell-edge band or a cell-center band. In the description below, though each RB is determined if it is a cell-edge band or a cell-center band in this embodiment, another embodiment is also possible in which an RB group composed of multiple RBs or a band portion is determined if it is a cell-edge band or a cell-center band. A BS performs statistical processing of RNTP, collected from the neighboring BSs, for each RB (801). The RNTP statistical processing means processing for calculating the RNTP statistical amount, for example, for calculating the number of neighboring BSs where the RNTP flag is on or for weighting the RNTP from each neighboring BS by the inverse of the distance between this BS and the neighboring BS and adding up the weighted RNTPs. If the statistical value of RNTP for an RB is larger than the predetermined threshold (Yes in 802), the RB is allocated to a cell-center band considering that the transmit power of the RB in the neighboring cells is high on the average (804). If not (No in 802), the RB is allocated to a cell-edge band considering that the transmit power of the RB in the neighboring cells is low on the average (803).

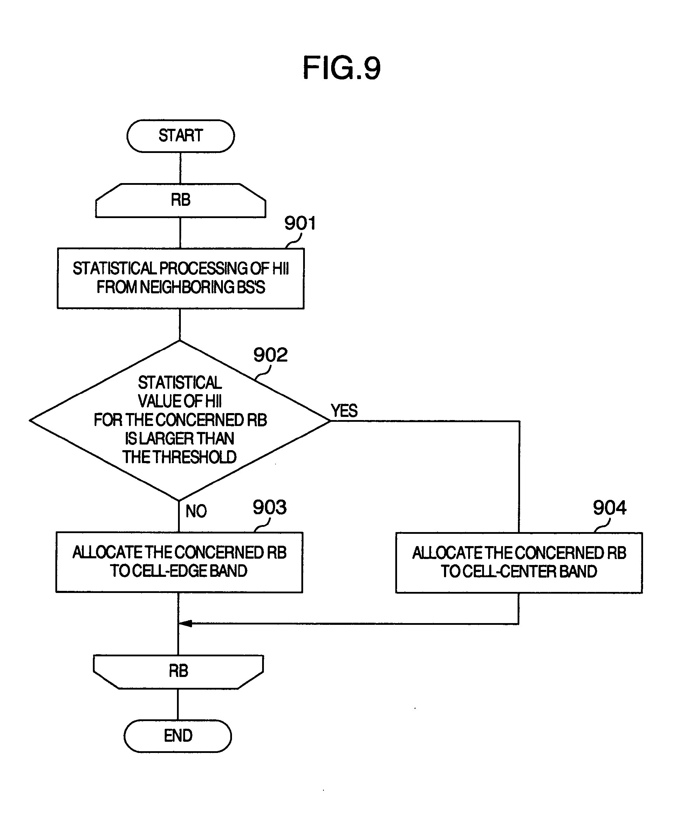

The following describes an actual example of the bandwidth partitioning method on an uplink with reference to FIG 9. FIG 9 is a flowchart showing an example of bandwidth partitioning based on the interference sensitivity information representing the sensitivity for interference received on an uplink obtained from the neighboring BSs. In the example shown in FIG 9, HII defined in E-UTRAN is used as the uplink interference sensitivity information. In the example shown in FIG 9, the bandwidth is partitioned by determining if an RB, the minimum unit of frequency resource assignment, is a cell-edge band or a cell-center band. In the description below, though each RB is determined if it is a cell-edge band or a cell-center band in this specification, the present invention is applicable also to a case in which an RB group composed of multiple RBs or a band portion is determined if it is a cell-edge band or a cell-center band. ABS performs statistical processing of HII, collected from the neighboring BSs, for each RB (901). The HII statistical processing means processing for calculating the HII statistical amount, for example, for calculating the number of neighboring BSs where the HII flag is on or for weighting the HII from each neighboring BS by the inverse of the distance between this BS and the neighboring BS and adding up the weighted HIIs. If the statistical value of HII for an RB is larger than the predetermined threshold (Yes in 902), the RB is allocated to a cell-center band considering that the received interference power of the RB in the neighboring BSs is high on the average (904). If not (No in 902), the RB is allocated to a cell-edge band considering that the received interference power of the RB in the neighboring BSs is low on the average (903).

In principle, the frequency resources are assigned to cell-edge MSs in the cell-edge band, and to cell-center MSs in the cell-center band. When the number of cell-edge MSs is increased and the frequency resources in the cell-edge band become insufficient, the frequency resources in the cell-center band may be assigned temporarily to cell-edge MSs. However, when a situation arises where the principle described above is not observed, that is, when the frequency resources in the cell-center band are assigned to a cell-edge MS, the lower allowed transmit power of the cell-center band is applied to the cell-edge MS that requires a high transmit power, potentially resulting in a decrease in the throughput of the cell-edge MS.

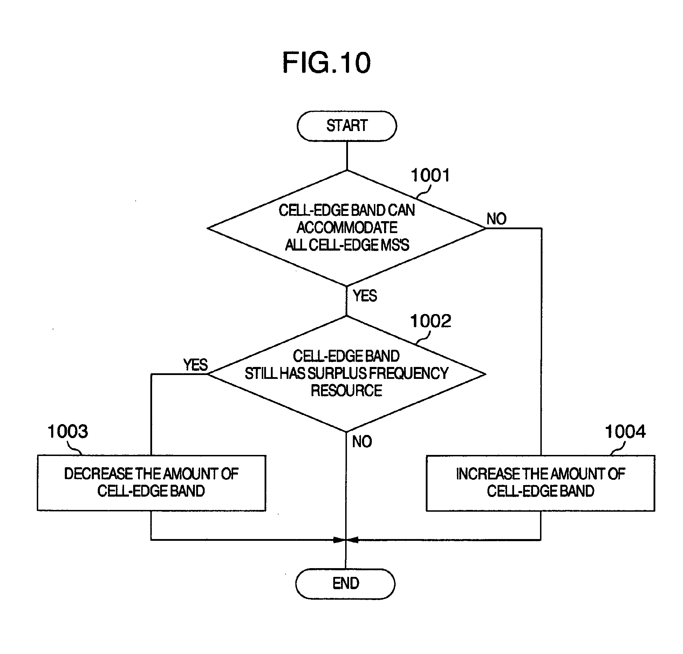

For this reason, when the frequency resources in the cell-edge band become insufficient, it is desirable to increase the amount of frequency resources in the cell-edge band. The following describes the adjustment method of the cell-edge band amount with reference to FIG 10. FIG 10 is a flowchart showing an example of the cell-edge band increase/decrease procedure that is executed based on the surplus and insufficiency of cell-edge band in a cell. Referring to FIG 10, the BS assigns frequency resources to cell-edge MSs in the cell-edge band and checks if the cell-edge band can accommodate all cell-edge MSs (1001). If it is found that the cell-edge band cannot accommodate all cell-edge MSs (No in 1001), the BS judges that the cell-edge band is insufficient and increases the amount of the cell-edge band (1004). If it is found that the cell-edge band can accommodate all cell-edge MSs (Yes in 1001), the BS checks if there are surplus frequency resources in the cell-edge band (1002). If there are surplus frequency resources in the cell-edge band (Yes in 1002), the BS judges that the amount of the cell-edge band is surplus and decreases the amount of the cell-edge band (1003).

Note that the time period of bandwidth partitioning need not be the same as the time period of frequency resource assignment but may be longer than the time period of frequency resource assignment. That is, it is possible to check the insufficient or surplus amount of the cell-edge band, which has been generated during frequency resource assignment and accumulated since the previous bandwidth partitioning, and to judge if the cell-edge band is surplus or insufficient based on this accumulated value. If it is found at frequency resource assignment timing that the cell-edge band is insufficient, the frequency resources in the cell-center band may be assigned to cell-edge MSs until the amount of the cell-edge band is increased at the next bandwidth partitioning timing. Also note that the timing at which the judgment is made in FIG 10 if the cell-edge band is surplus or insufficient and the timing at which the amount of the cell-edge band is changed may be in the same time slot or in different time slots. If they are in different time slots, the cell-edge band is insufficient from the timing it is judged that the cell-edge band is insufficient to the timing the amount of cell-edge band is changed and so, during this period, the frequency resources in the cell-center band may be assigned to the cell-edge MSs.

However, when the amount of cell-edge band in one cell is increased according to the traffic status of that cell, the transmit power is also increased and, thereby, the throughput of the cell is increased. The problem is that the increase in the transmit power in this cell increases interference to the neighboring cells, resulting in a decrease in the throughput of those cells.

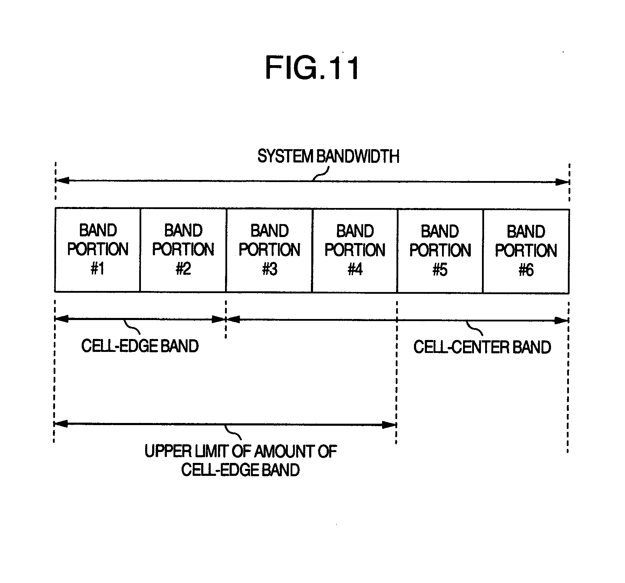

To solve this problem, the upper limit of the amount of cell-edge-band of each cell is set in this embodiment. Referring to FIG. 11, the following describes how the upper limit of the amount of cell-edge band is set in this embodiment. FIG 11 is a diagram showing the amount of cell-edge band, the amount of cell-center band, and the upper limit of the amount of cell-edge band. In the example shown in FIG 11, band portion 1 and band portion 2 currently belong to the cell-edge band and band portion 3, band portion 4, band portion 5, and band portion 6 currently belong to the cell-center band. The upper limit of the amount of cell-edge band is set to four band portions. In this case, band portion 1 and band portion 2 as well as band portion 3 and band portion 4 may be used as the cell-edge band but band portion 5 and band portion 6 may not. In this way, the amount of the cell-edge band is set to an amount not exceeding the predetermined amount. Although composed of consecutive band portions for the sake of simplicity in the example in FIG 11, each of the cell-edge band and the cell-center band may be composed of non-consecutive band portions.

The high-order entity that manages multiple BSs gives each BS the upper limit of the amount of cell-edge-band in the form of the upper limit of the number ofRBs in the cell-edge band or in the form of the upper limit value of the ratio of the cell-edge band to the system bandwidth. The high-order entity is, for example, the BS control device 103 shown in FIG 1. A new management device for managing multiple BS control devices 103 may also be provided for use as the high-order entity. In addition, one of the BSs may have the function of the high-order entity. The upper limit of the amount of cell-edge band in each cell is notified from the high-order entity to each cell. For example, when the BS control device 103 is used as the high-order entity, the upper limit of the amount of cell-edge band of each cell is notified to each cell via the wired line.

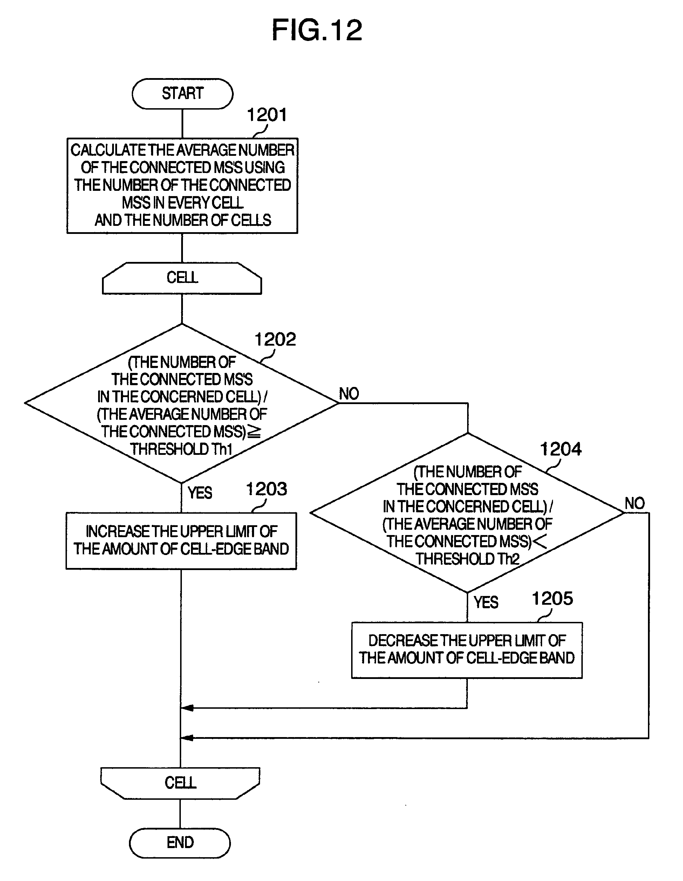

For example, the upper limit of the amount of cell-edge band may be decided as a fixed amount, or decided based on the number of MSs connected in each cell, or decided according to the traffic amount of each cell. FIG 12 is a flowchart showing an example of the procedure used by the high-order entity for deciding the upper limit of the amount of cell-edge band based on the number of MSs connected in each cell. In the flowchart in FIG 12, the high-order entity first calculates the average number of the connected MSs from the total number of MSs connected in the managed cells and the number of managed cells (1201). Next, the high-order entity controls the upper limit of the amount of cell-edge band for each cell. For a cell, if (number of connected MSs in the cell)/(average number of connected MSs) is equal to or larger than a predetermined threshold Th1 (Yes in 1202), the high-order entity increases the upper limit of the amount of cell-edge band of the cell (1203). If (number of connected MSs in the cell)/(average number of connected MSs) is smaller than the threshold Th1 (No in 1202), the high-order entity compares it with the threshold Th2 (1204). If (number of connected MSs in the cell)/(average number of connected MSs) is smaller than the threshold Th2 (Yes in 1204), the high-order entity decreases the upper limit of the amount of cell-edge band of the cell (1205). If (number of connected MSs in the cell)/(average number of connected MSs) is equal to or larger than the threshold Th2 (No in 1204), the high-order entity does not change the upper limit of the amount of cell-edge band of the cell.

The upper limit of the amount of cell-edge band is notified from the high-order entity to each cell. The number of times the notification is transmitted may be reduced by transmitting it only at the initial configuration timing and each timing it is changed.

### [First example]

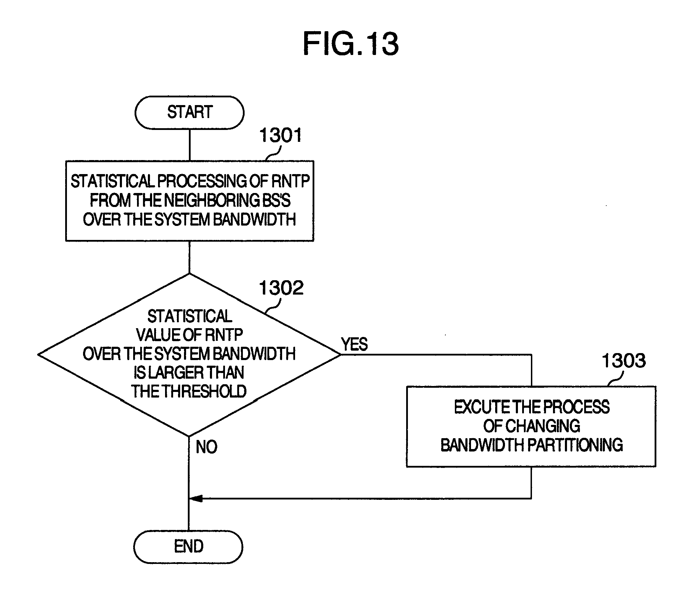

A first example of the present invention will be described below with reference to FIG 13. In the first example, an unnecessary increase in the amount of cell-edge band is prohibited on the downlink based on the information obtained from the neighboring cells.

FIG 13 is a flowchart showing an example of the procedure for use by a BS, which performs bandwidth partitioning, to determine if a change from a cell-center band to a cell-edge band is to be prohibited based on the information obtained from the neighboring cells. In the example shown in FIG 13, the information obtained from the neighboring cells is RNTP. Referring to FIG 13, the BS first calculates the statistical amount of RNTP information obtained from the neighboring cells (1301). The statistical amount of RNTP information is, for example, the total of RNTP from the neighboring cells calculated by adding up in the frequency direction or the amount of RNTP accumulated for a predetermined period. If the RNTP statistical amount is equal to or larger than the threshold (Yes in 1302), the BS partitions the bandwidth (1303). If the RNTP statistical amount is smaller than the threshold (No in 1302), the BS does not partition the bandwidth.

For example, when the scheme such as that shown in FIG 8 is used where, if the RNTP notified from the neighboring cells is generally low in an RB, the RB is determined to be a cell-edge band, this example may be used to prevent the BS from increasing the cell-edge band unnecessarily also when there are not so many high transmit power RBs in the neighboring cells and therefore RNTP, reported by the neighboring cells, is low.

### [Second example]

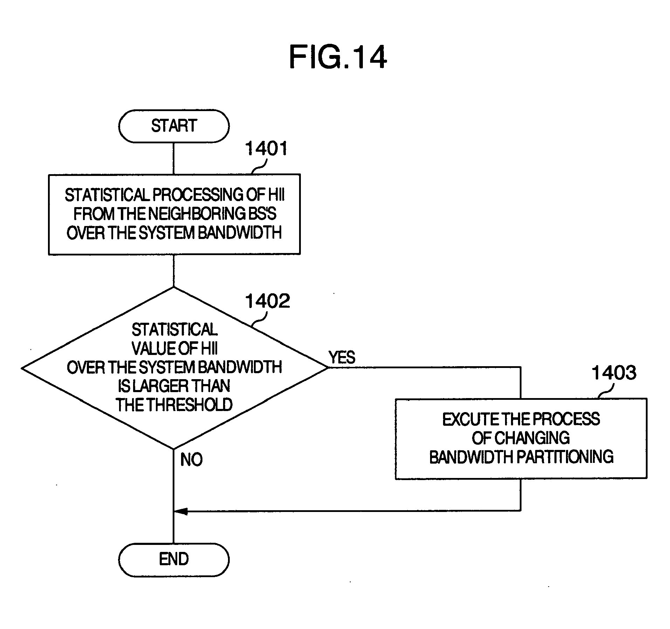

A second example of the present invention will be described below with reference to FIG 14. In the second example, an unnecessary increase in the amount of cell-edge band is prohibited on the uplink based on the information obtained from the neighboring cells.

FIG 14 is a flowchart showing an example of the procedure for use by a BS, which performs bandwidth partitioning, to determine if a change from a cell-center band to a cell-edge band is to be prohibited based on the information obtained from the neighboring cells. In the example shown in FIG 14, the information obtained from the neighboring cells is HII. Referring to FIG 14, the BS first calculates the statistical amount of HII information obtained from the neighboring cells (1401). The statistical amount of HII information is, for example, the total of HII from the neighboring cells calculated by adding up in the frequency direction or the amount of HII accumulated for a predetermined period. If the HII statistical amount is equal to or larger than the threshold (Yes in 1402), the BS partitions the bandwidth. If the HII statistical amount is smaller than the threshold (No in 1402), the BS does not partition the bandwidth.

For example, when the scheme such as that shown in FIG 9 is used where, if the HII notified from the neighboring cells is generally low in an RB, the RB is determined to be a cell-edge band, this example may be used to prevent the BS from increasing the cell-edge band unnecessarily also when there are not so many high interference-sensitivity RBs in the neighboring cells and therefore HII, reported by the neighboring cells, is low.

### [Third example]

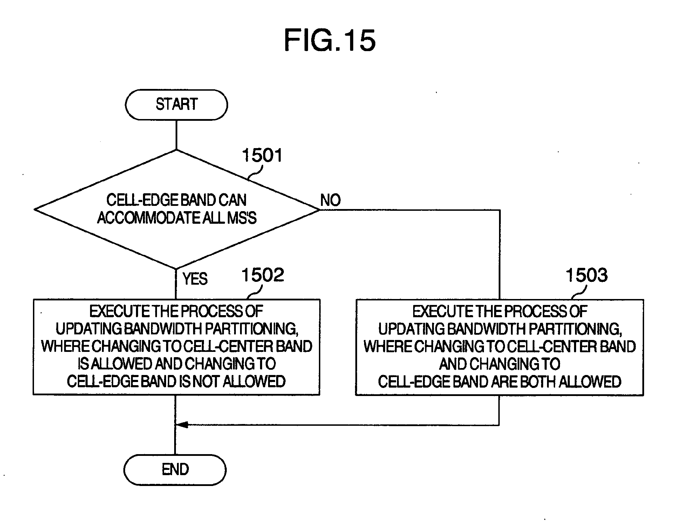

A third example of the present invention will be described below with reference to FIG 15. In the third example, an unnecessary increase in the amount of cell-edge band is prohibited according to whether or not the cell-edge band can accommodate the MSs. The third example may be applied to both the downlink and the uplink.

FIG 15 is a flowchart showing an example of the procedure for use by a BS to determine if a change from a cell-center band to a cell-edge band is to be prohibited according to whether the cell-edge band can accommodate the MSs. In FIG 15, after the frequency resource assignment, the BS first checks if the cell-edge band can accommodate all MSs (1501). Whether or not the cell-edge band can accommodate all MSs may be determined, for example, based on the result in a predetermined period in the past. If the cell-edge band can accommodate all MSs (Yes in 1501), the BS determines that there is no need to increase the amount of cell-edge band and prohibits a change from a cell-center band to a cell-edge band (1502). In this case, note that a cell-edge band may be changed to a cell-center band. If the cell-edge band cannot accommodate all MSs, the BS allows both a change from a cell-center band to a cell-edge band and a change from a cell-edge band to a cell-center band.

This example reduces the need for preparing more RBs, which have high received interference power, than are necessary, thus allowing the BS to prevent an unnecessary increase in the cell-edge band.

### [Fourth example]

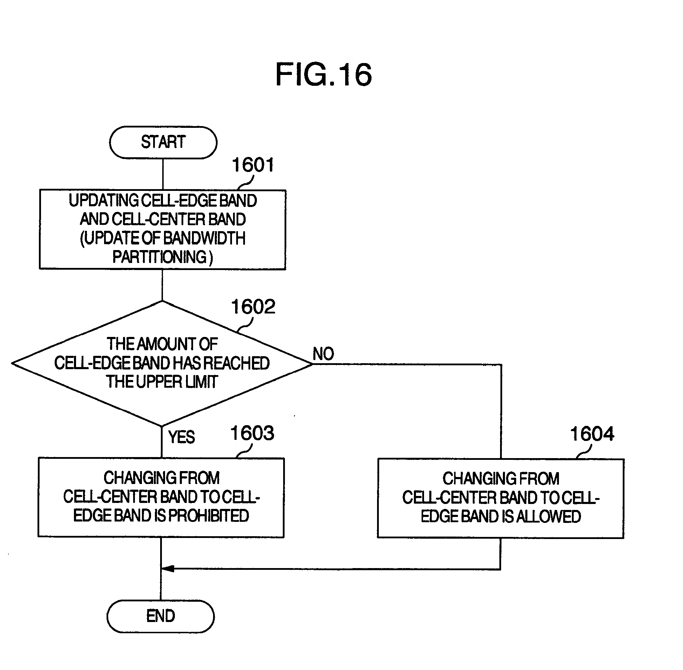

A fourth example of the present invention will be described below with reference to FIG 16. In the fourth example, an increase in the amount of cell-edge band is prohibited according to whether or not the amount of cell-edge band exceeds the upper limit of the amount of cell-edge band. The fourth example may be applied to both the downlink and the uplink.

FIG 16 is a flowchart showing an example of the procedure for use by a BS to determine if a change from a cell-center band to a cell-edge band is to be prohibited according to whether the amount of cell-edge band exceeds the upper limit. In FIG 16, after the bandwidth partitioning, the BS checks if the amount of cell-edge band has reached the upper limit amount notified by the higher-order entity (1601). If the amount of cell-edge band has reached the upper limit amount (Yes in 1602), a change from a cell-center band to a cell-edge band is prohibited (1603). In this case, note that a cell-edge band may be changed to a cell-center band. If the amount of cell-edge band has not yet reached the upper limit amount (No in 1602), the BS allows both a change from a cell-center band to a cell-edge band and a change from a cell-edge band to a cell-center band (1604).

Whether or not the amount of cell-edge band has reached the upper limit amount may be determined, at bandwidth partitioning timing, after the determination is made for all RBs if they are cell-edge bands or cell-center bands or after the determination is made for one or more RBs if they are cell-edge bands or cell-center bands.

This example allows each cell to control the amount of cell-edge band based on the upper limit amount of cell-edge band notified by the high-order entity, thereby preventing the cell-edge band from being increased too much.

In the description above, the bandwidth partitioning method has been described in which the upper limit of the amount of cell-edge band is set and the bandwidth is partitioned according to the upper limit amount. Similarly, it is possible to set the lower limit of the amount of cell-edge band and to partition the bandwidth according to the lower limit. When the bandwidth is partitioned according to the information obtained from the neighboring cells such as RNTP or HII, the amount of cell-edge band may be decreased by the bandwidth partitioning depending upon the status of the neighboring cells and, as a result, the throughput of the station itself may be decreased. This problem may be avoided by setting the lower limit of the amount of cell-edge band. This lower limit of the amount of cell-edge band is set, and is notified to each cell, by the high-order entity in the same way as the upper limit of the amount of cell-edge band. Alternatively, the lower limit of the amount of cell-edge band may be set by each BS. The following describes an example of bandwidth partitioning according to the lower limit of the amount of cell-edge band.

### [Fifth example]

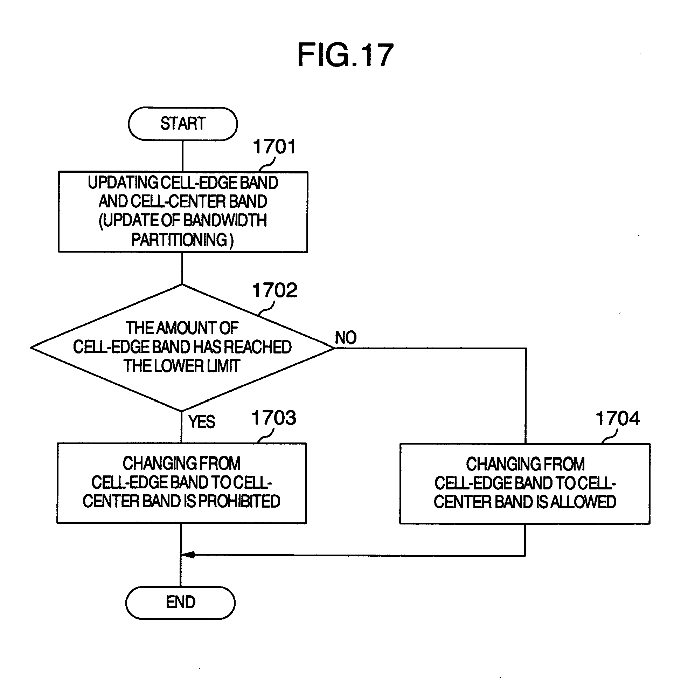

A fifth example of the present invention will be described below with reference to FIG 17. In the fifth example, a decrease in the amount of cell-edge band, that is, an increase in the amount of cell-center band, is prohibited according to whether or not the amount of cell-edge band falls below the lower limit of the amount of cell-edge band. The fifth example may be applied to both the downlink and the uplink.

FIG 17 is a flowchart showing an example of the procedure for use by a BS to determine if a change from a cell-edge band to a cell-center band is to be prohibited according to whether the amount of cell-edge band falls below the lower limit. Referring to FIG 17, after hte bandwidth partitioning, the BS checks if the amount of cell-edge band has reached the lower limit amount notified by the higher-order entity (1701). If the amount of cell-edge band is equal to or smaller than the lower limit (Yes in 1702), a change from a cell-edge band to a cell-center band is prohibited (1703). In this case, note that a cell-center band may be changed to a cell-edge band. If the amount of cell-edge band is larger than the lower limit amount (No in 1702), the BS allows both a change from a cell-center band to a cell-edge band and a change from a cell-edge band to a cell-center band (1704).

Whether or not the amount of cell-edge band has fallen below the lower limit amount may be determined , at bandwidth partitioning timing, after the determination is made for all RBs if they are cell-edge bands or cell-center bands or after the determination is made for one or more RBs if they are cell-edge bands or cell-center bands in the same manner as in the fourth example in which the determination is made if the amount of cell-edge band has reached the upper limit amount.

This example allows each cell to control the amount of cell-edge band based on the lower limit amount of cell-edge band notified by the high-order entity, thereby preventing the cell-edge band from being decreased too much.

As described above, when the cell-edge band is increased because it is insufficiency in a cell, the transmit power is increased and the throughput of the cell is improved. However, the increased transmit power results in an increase in interference to the neighboring cells and, as a result, in a decrease the throughput of those cells. In this case, the insufficiency of the cell-edge band may be solved by decreasing the number of cell-edge MSs.

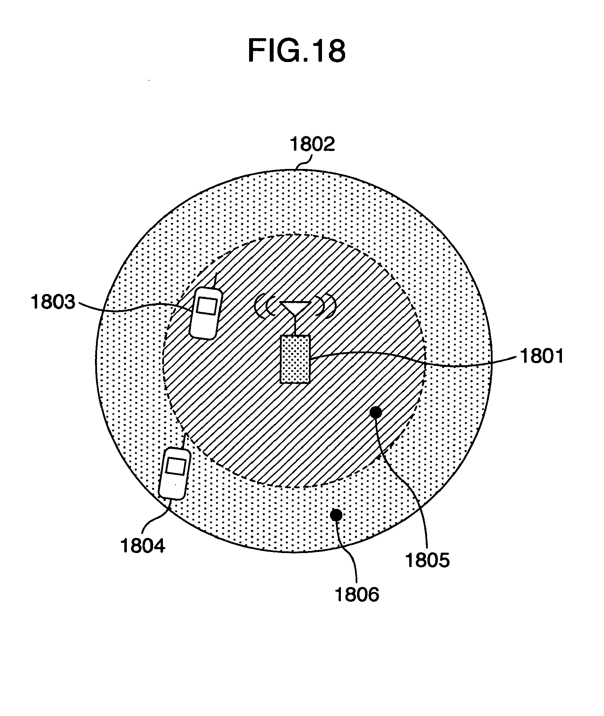

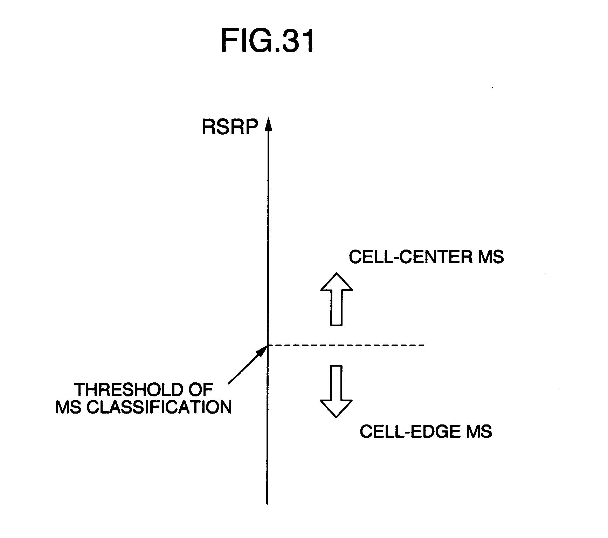

The following describes the classification of MSs with reference to FIG 18 and FIG 31. FIG 18 is a diagram showing an example of the locations of a cell-edge MS and a cell-center MS in a cell. FIG 31 is a diagram showing an example of the classification of MSs with RSRP as the criterion. In FIG 18, the approximate communication range of a BS 1801 is shown by a cell 1802. The BS 1801 classifies MSs based on the method already described with reference to FIG 2 and FIG 3, that is, based on RSRP notified from the MSs to the BS. For example, the BS 1801 classifies the MSs with RSRP as the criterion as shown in FIG. 31. According to the criterion shown in FIG 31, an MS whose RSRP is equal to or larger than the MS classification threshold is classified into a cell-center MS and an MS whose RSRP is smaller than the MS classification threshold is classified into a cell-edge MS. For example, when the MSs in FIG 18 are classified, the result will show that an MS 1803 which is near the BS 1801 1 and whose RSRP is large is classified into a cell-center MS and an MS 1804 which is far from the BS 1801 and whose RSRP is small is classified into a cell-edge MS. In general, an MS in a cell-center area 1805 tends to be classified into a cell-center MS and an MS in a cell-edge area 1806 tends to be classified into a cell-edge MS as described above.

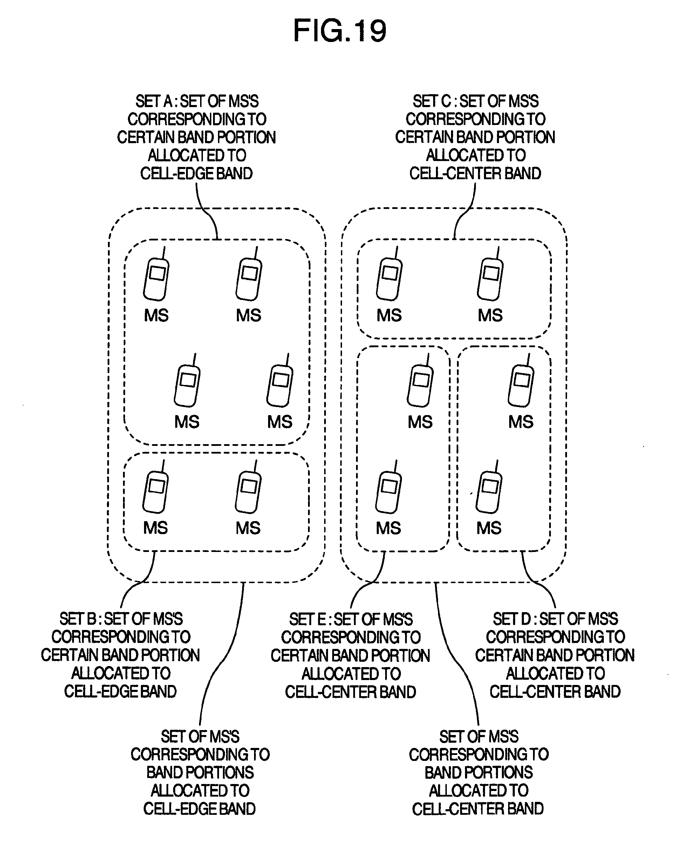

The MSs are classified before the frequency resources are assigned. FIG 19 is a diagram showing an example of the classification of MSs. In FIG 19, the system bandwidth is partitioned into several band portions as shown in FIG 4, and the MSs are classified into small groups each corresponding to a band portion. Each MS is classified into one of a cell-edge MS and a cell-center MS according to the band, cell-edge band or cell-center band, to which the corresponding band portion belongs.

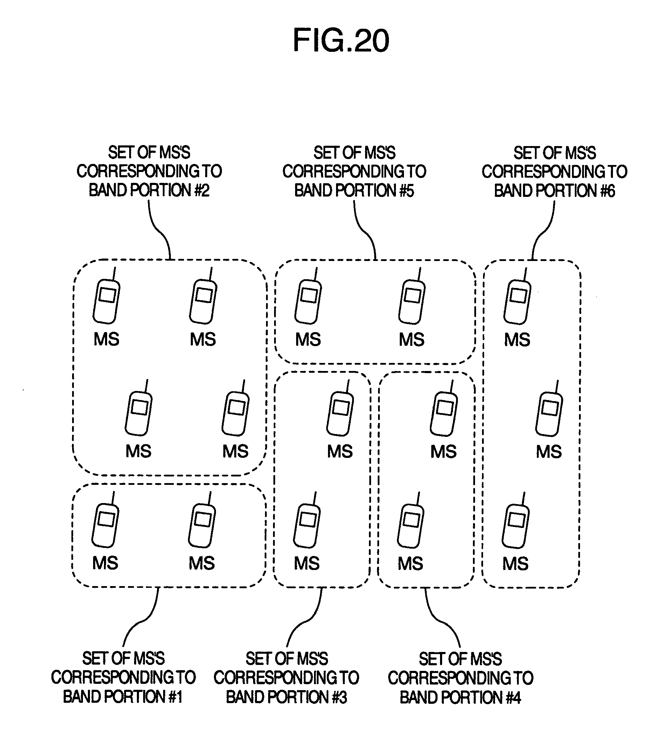

FIG. 20 is a diagram showing the relation between the transmit power limitation on the band portions described in FIG 5 and the classification of MSs. In FIG 20, the MSs are classified into small groups each corresponding to one of band portion 1, band portion 2, band portion 3, band portion 4, band portion 5, and band portion 6. When the maximum transmit power allowed in each band portion is set as shown in FIG 5, the transmit power limitation, determined by the allowed transmit power of the band portion corresponding to the small group to which each MS belongs, is placed in principle on the MS when the frequency resources are assigned to the MS in the band portion corresponding to the small group to which the MS belongs. Note that, when the frequency resources are assigned to an MS in a band portion other than that corresponding to the small group to which the MS belongs, the transmit power limitation, determined by the allowed transmit power of the band portion corresponding to the assigned frequency resources, is placed in principle on the MS.

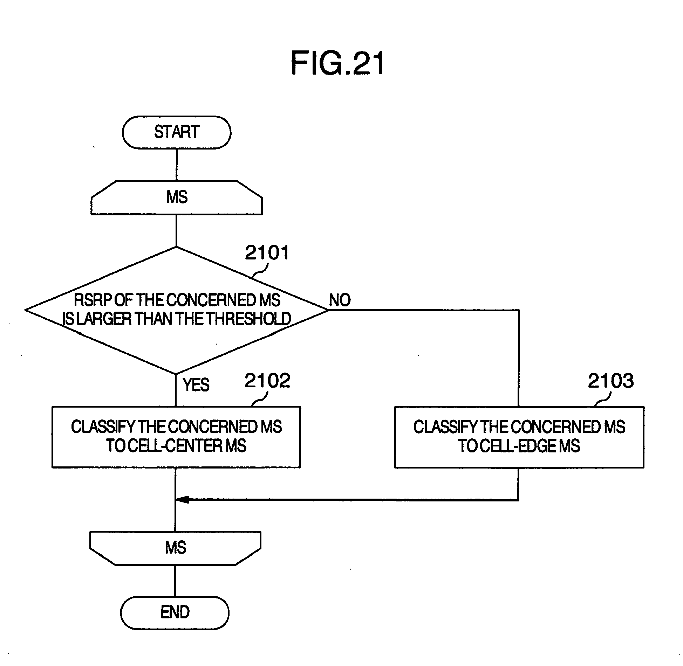

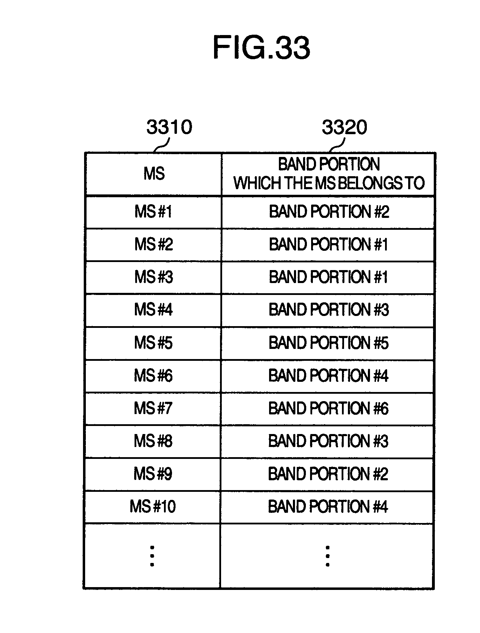

FIG 33 is a table showing the classification of MSs shown in FIG 20. The table in FIG 33 includes, for each MS 3310, the information on the band portion to which the MS belongs 3320. The BS stores the table, such as the one shown in FIG 33, in the memory 3411 shown in FIG 34 and, when the radio control block 3405 in FIG 34 assigns frequency resources to MSs and sets the transmit powers, uses the table in FIG 33 and the table in FIG 32 in combination. The BS classifies the MSs. As already shown in FIG 2 and FIG 3, the BS classifies the MSs into cell-edge MSs and cell-center MSs based on RSRP reported by the MSs. FIG 21 is a flowchart showing an example of classification processing in the BS in which the MSs are classified into cell-edge MSs and cell-center MSs based on RSRP. In FIG 21, the BS checks if RSSP reported by an MS is equal to or larger than a predetermined threshold (2101). If RSRP is equal to or larger than the threshold (Yes in 2101), the BS classifies the MS into a cell-center MS (2102). If not (No in 2102), the BS classifies the MS into a cell-edge MS (2103). The classification of MSs may the same or different between the downlink and the uplink.

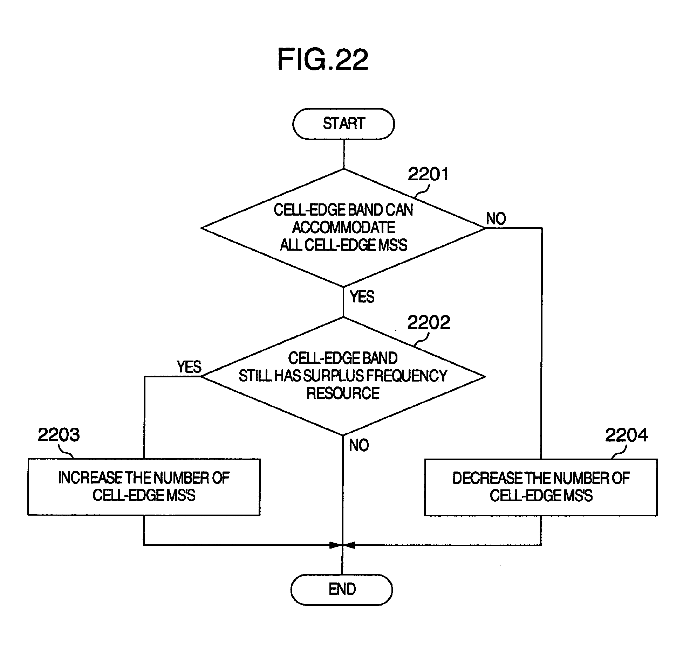

In principle, the frequency resources are assigned to cell-edge MSs in the cell-edge band, and to cell-center MSs in the cell-center band. When the number of cell-edge MSs is increased and the frequency resources of the cell-edge band become insufficient, the insufficiency of the frequency resources of the cell-edge band may be solved by decreasing the number of cell-edge MSs. The following describes how to adjust the number of cell-edge MSs with reference to FIG. 22. FIG 22 is a flowchart showing an example of the procedure for increasing/decreasing the number of cell-edge MSs based on the surplus and insufficiency of cell-edge band in each cell. Referring to FIG 22, the BS assigns the frequency resources to the cell-edge MSs in the cell-edge band and checks if the cell-edge band can accommodate all cell-edge MSs (2201). If it is found that the cell-edge band cannot accommodate all cell-edge MSs (No in 2201), the BS judges that there are too many cell-edge MSs and decreases the number of cell-edge MSs (2204). If it is found that the cell-edge band can accommodate all cell-edge MSs (Yes in 2201), the BS checks if there are surplus frequency resources in the cell-edge band (2202). If there are surplus frequency resources in the cell-edge band (Yes in 2202), the BS judges that the number of cell-edge MSs is small and increases the number of cell-edge MSs (2203). Although the number of cell-edge MSs is increased in the example in FIG 22 if there are surplus frequency resources in the cell-edge band, an increase in the number of cell-edge MSs increase interference to the neighboring cells and, so, the number of cell-edge MSs need not unnecessarily be increased even if there are surplus frequency resources in the cell-edge band.

Note that the time period of the classification of MSs need not be the same as the time period of frequency resource assignment but may be longer than the time period of frequency resource assignment. That is, it is possible to check the insufficient or surplus amount of the cell-edge band, which has been generated during frequency resource assignment and accumulated since the previous classification of MSs, and to judge if the cell-edge band is surplus or insufficient based on this accumulated value. If it is found at frequency resource assignment timing that the cell-edge band is insufficient, the frequency resources in the cell-center band may be assigned to cell-edge MSs until the number of cell-edge MSs is decreased at the next classification of MSs . Also note that, in FIG 22, the timing at which the judgment is made if the cell-edge band is surplus or insufficient and the timing at which the classification of MSs is changed may be in the same time slot or in different time slots. If they are in different time slots, the cell-edge band is insufficient from the timing it is judged that the cell-edge band is insufficient to the timing the classification of MSs is changed and so, during this period, the frequency resources in the cell-center band may be assigned to the cell-edge MSs.

On the other hand, if the number of cell-edge MSs is increased rapidly as a result of the classification of MSs according to the status of RSRP of MSs such as that shown in FIG 21, the amount of cell-edge band becomes insufficient and the throughput of cell-edge MSs is decreased rapidly.

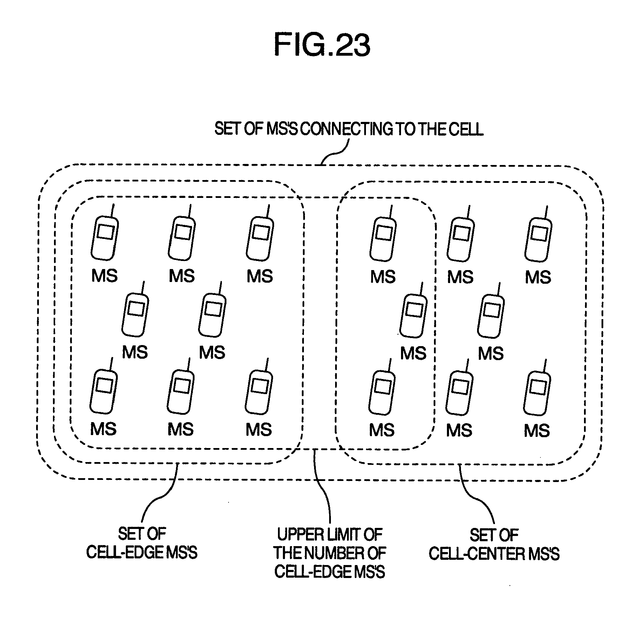

To solve this problem, the upper limit of the number of cell-edge MSs is set in this example. The following describes the upper limit setting of the number of cell-edge MSs in this example with reference to FIG 23. FIG 23 is a diagram showing an example of the number of cell-edge MSs, the number of cell-center MSs, and the upper limit of the number of cell-edge MSs. In the example shown in FIG 23, there are eight cell-edge MSs and eight cell-center MSs. Because the upper limit of the number of cell-edge MSs is 11, another three cell-edge MSs may be added but any more cannot. In this way, the number of cell-edge MSs is set to a predetermined number or less.

The high-order entity that manages multiple BSs gives each BS the upper limit of the number of cell-edge MSs in the form of the upper limit value of the number of cell-edge MSs or in the form of the upper limit value of the ratio of the number of cell-edge MSs to the number of MSs connected in the cell. The high-order entity is, for example, the BS control device 103 shown in FIG 1. Anew management device for managing multiple BS control devices 103 may also be provided for use as the high-order entity. In addition, one of the BSs may have the function of the high-order entity. The upper limit of the number of cell-edge MSs in each cell is notified from the high-order entity to each cell. For example, when the BS control device 103 is used as the high-order entity, the upper limit of the number of cell-edge MSs of each cell is notified to each cell via the wired line.

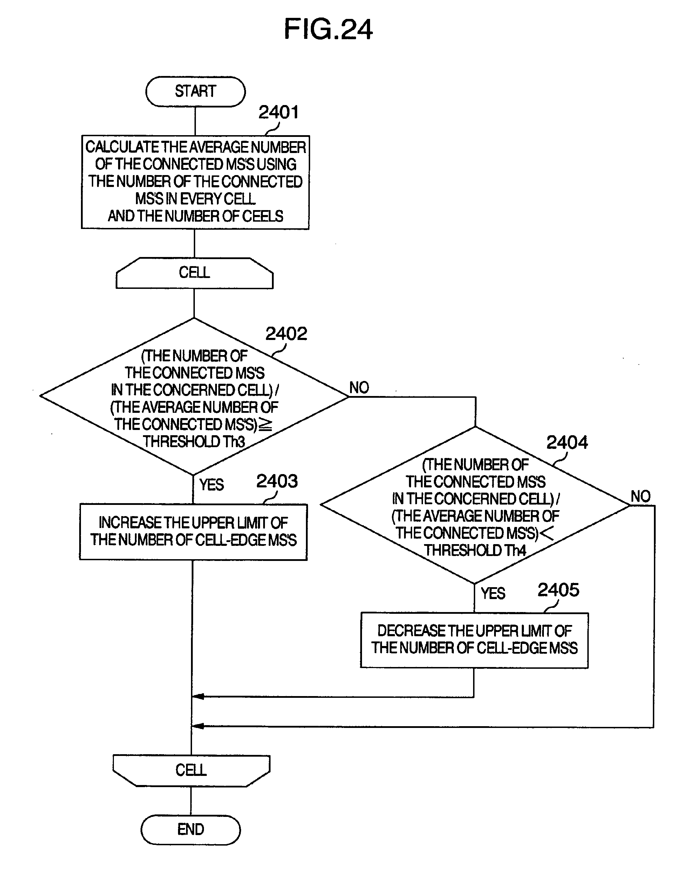

The upper limit of the number of cell-edge MSs may be set, for example, as a fixed value or may be set dynamically. For example, the upper limit of the number of cell-edge MSs may be decided based on the number of connected MSs in each cell or according to the traffic amount of each cell. FIG 24 is a flowchart showing an example of the procedure used by the high-order entity for deciding the upper limit of the number of cell-edge MSs based on the number of MSs connected in each cell. In the flowchart in FIG 24, the high-order entity first calculates the average number of the connected MSs from the total number of MSs connected in the managed cells and the number of managed cells (2401). Next, the high-order entity controls the upper limit value of the number of cell-edge MSs for each cell. For a cell, if (number of connected MSs in the cell)/(average number of connected MSs) is equal to or larger than a predetermined threshold Th3 (Yes in 2402), the high-order entity increases the upper limit of the number of cell-edge MSs of the cell (2403). If (number of connected MSs in the cell)/(average number of connected MSs) is smaller than the threshold Th3 (No in 2402), the high-order entity compares it with the threshold Th4 (2404). If (number of connected MSs in the cell)/(average number of connected MSs) is smaller than the threshold Th4 (Yes in 2404), the high-order entity decreases the upper limit value of the number of cell-edge MSs of the cell (2405). If (number of connected MSs in the cell)/(average number of connected MSs) is equal to or larger than the threshold Th4 (No in 2404), the high-order entity does not change the upper limit value of the number of cell-edge MSs of the cell.

The upper limit of the number of cell-edge MSs is notified from the high-order entity to each cell. The number of times the notification is transmitted may be reduced by transmitting it only at the initial configuration timing and each timing it is changed. The upper limit of the number of cell-edge MSs may be the same or different between the downlink and the uplink.

### [Sixth example]

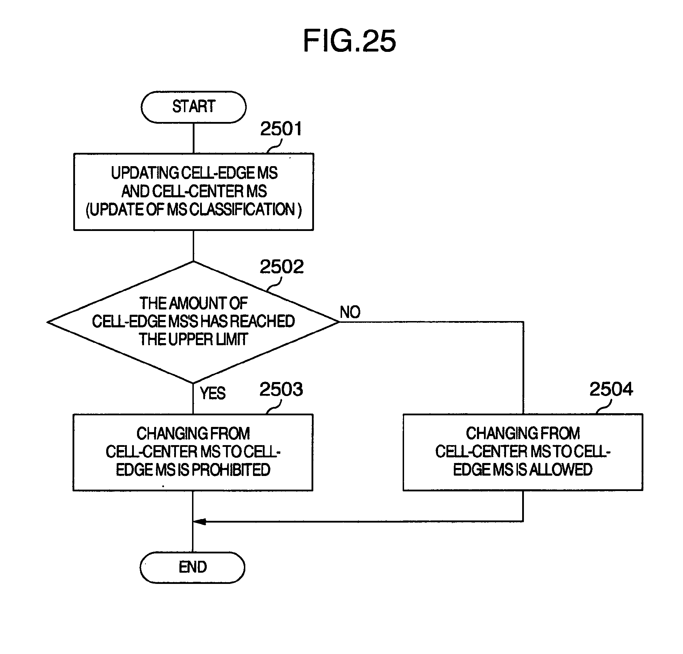

A sixth example of the present invention will be described below with reference to FIG 25. In the sixth example, an increase in the number of cell-edge MSs is prohibited according to whether the number of cell-edge MSs exceeds the upper limit of the number of cell-edge MSs. The sixth example may be applied to both the downlink and the uplink.

FIG 25 is a flowchart showing an example of the procedure for use by a BS to determine if a change from a cell-center MS to a cell-edge MS is to be prohibited according to whether the number of cell-edge MSs exceeds the upper limit value. In FIG 25, after the classification of MSs (2501), the BS checks if the number of cell-edge MSs has reached the upper limit value notified by the higher-order entity (2502). If the number of cell-edge MSs has reached the upper limit value (Yes in 2502), a change from a cell-center MS to a cell-edge MS is prohibited (2503). In this case, note that a cell-edge MS may be changed to a cell-center MS. If the number of cell-edge MSs has not yet reached the upper limit value (No in 2502), the BS allows both a change from a cell-center MS to a cell-edge MS and a change from a cell-edge MS to a cell-center MS (2504).

Whether or not the number of cell-edge MSs has reached the upper limit value may be determined, at MS classification timing, after the determination is made for all MSs connected to the BS if they are cell-edge MSs or cell-center MSs or after the determination is made for one or more MSs if they are cell-edge MSs or cell-center MSs.

This example allows each cell to control the number of cell-edge MSs based on the upper limit value of the number of cell-edge MSs notified by the high-order entity, thereby preventing the cell-edge MSs from being increased too much.

### [Seventh example]

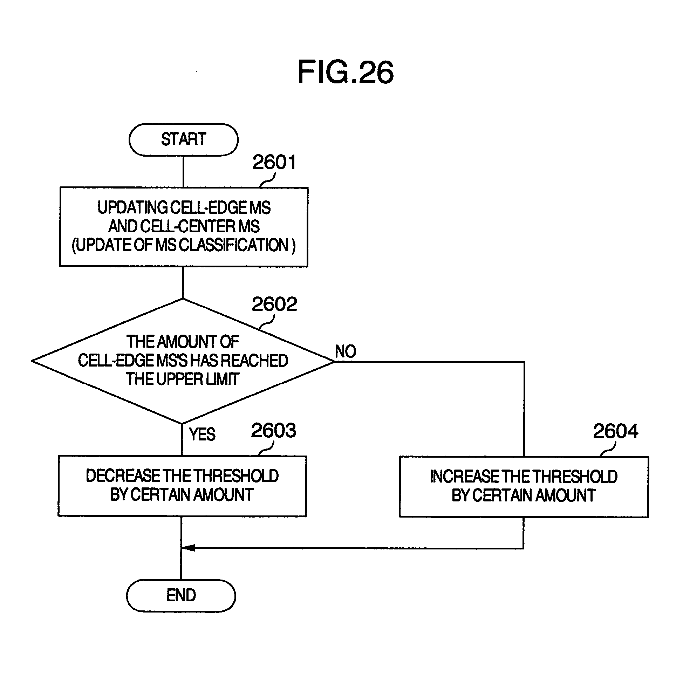

A seventh example of the present invention will be described below with reference to FIG 26. In the seventh example, the MS classification threshold is changed to make it difficult for an MS to be classified into a cell-edge MS according to whether or not the number of cell-edge MSs exceeds the upper limit of the number of cell-edge MSs. The seventh example may be applied to both the downlink and the uplink.

FIG 26 is a flowchart showing an example of the procedure for use by a BS to change the MS classification threshold to make it difficult for an MS to be classified into a cell-edge MS according to whether or not the number of cell-edge MSs exceeds the upper limit value. In the example in FIG 26, assume that the MSs are classified based on whether RSRP of MSs is equal to or larger than the threshold as in FIG 21. In FIG 26, after the classification of MSs (2601), the BS checks if the number of cell-edge MSs has reached the upper limit value notified by the higher-order entity (2602). If the number of cell-edge MSs has reached the upper limit value (Yes in 2602), the RSRP threshold is decreased by a certain amount so that it becomes difficult for an MS to be classified into a cell-edge MS (2603). If the number of cell-edge MSs has not reached the upper limit value (No in 2602), the RSRP threshold is increased by a certain amount so that it becomes easy for an MS to be classified into a cell-edge MS (2604). In the example shown in FIG 26, setting the decrease increment in the RSRP threshold smaller than the increase increment prevents the number of cell-edge MSs from being increased rapidly.

Whether or not the number of cell-edge MSs has reached the upper limit value may be determined, at MS classification timing, after the determination is made for all MSs connected to the BS if they are cell-edge MSs or cell-center MSs or after the determination is made for one or more MSs if they are cell-edge MSs or cell-center MSs.

This example allows each cell to control the number of cell-edge MSs based on the upper limit value of the number of cell-edge MSs notified by the high-order entity, thereby preventing the cell-edge MSs from being increased too much.

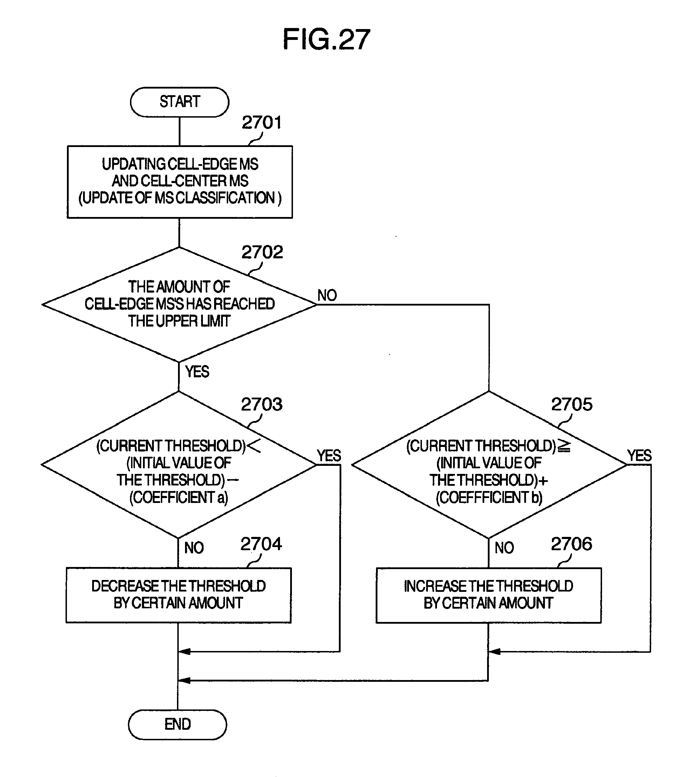

Although the RSRP threshold is increased by a certain amount in the example shown in FIG 26 if the number of cell-edge MSs has not reached the upper limit value, it is also possible not to change the RSRP threshold if the number of cell-edge MSs has not reached the upper limit value in order to prevent interference to the neighboring cells that would be generated by an increase in the number of cell-edge MSs. Alternatively, whether or not the RSRP threshold is changed if the number of cell-edge MSs has not reached the upper limit value may be determined according to whether the RSRP threshold is larger or smaller than a predetermined initial value. FIG. 27 is a flowchart showing an example of the procedure for use by a BS to determine whether or not the RSRP threshold is changed based on whether the RSRP threshold is larger or smaller than the initial value. Referring to FIG 27, if the number of cell-edge MSs has reached the upper limit value (Yes in 2702) after the BS classifies the MSs (2701) and if the RSRP threshold is not smaller than (initial value of the threshold - coefficient a) (No in 2703), the RSRP threshold is decreased by a certain amount (2704) so that it becomes difficult for an MS to be classified into a cell-edge MS. If the RSRP threshold is smaller than (initial value of the threshold - coefficient a) (Yes in 2703), the RSRP threshold is not decreased. If the number of cell-edge MSs has not reached the upper limit value (No in 2702) and if the RSRP threshold is not larger than (initial value of the threshold - coefficient b) (No in 2705), the RSRP threshold is increased by a certain amount (2706) so that it becomes difficult for an MS to be classified into a cell-edge MS. If the RSRP threshold is equal to or larger than (initial value of the threshold - coefficient b) (Yes in 2705), the RSRP threshold is not increased. This allows the RSRP threshold to be in the range between the minimum value and the maximum value determined by the initial value of the threshold value, coefficient a, and coefficient b.

### [Eighth example]

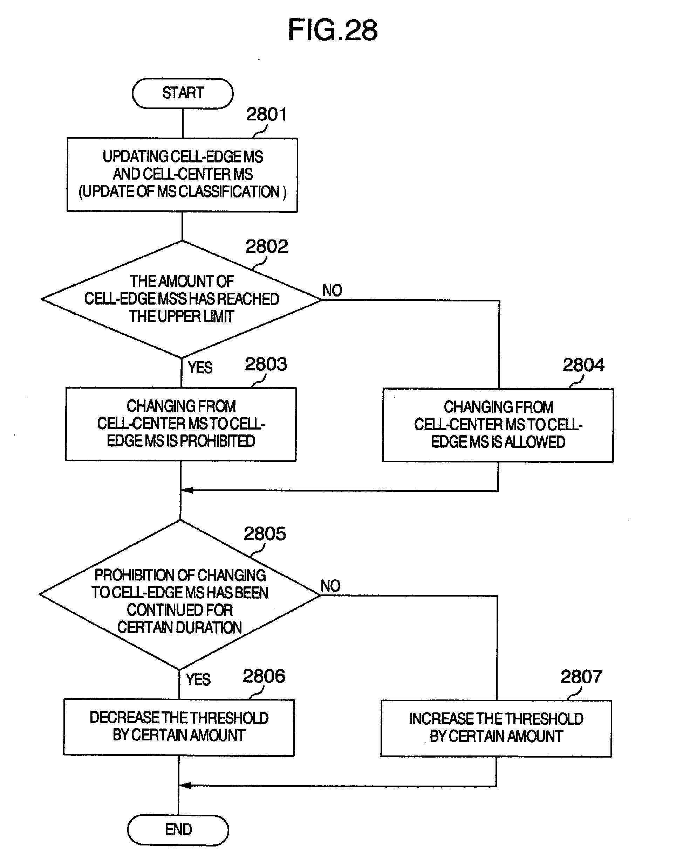

An eighth example of the present invention will be described below with reference to FIG 28. In the eighth example, an increase in the number of cell-edge MSs is prohibited according to whether or not the number of cell-edge MSs exceeds the upper limit of the number of cell-edge MSs and, if the prohibition state lasts for a predetermined period or longer, the MS classification threshold is changed so that it becomes difficult for an MS to be classified into a cell-edge MS. The eighth example may be applied to both the downlink and the uplink.

FIG 28 is a flowchart showing an example of the procedure for use by a BS to determine if a change from a cell-center MS to a cell-edge MS is to be prohibited according to whether or not the number of cell-edge MSs exceeds the upper limit value and, if the prohibition state lasts for a predetermine period or longer, to change the MS classification threshold so that it becomes difficult for an MS to be classified into a cell-edge MS. In FIG 28, after the classification of MSs (2801), the BS checks if the number of cell-edge MSs has reached the upper limit value notified by the high-order entity (2802). If the number of cell-edge MSs has reached the upper limit value (Yes in 2802), a change from a cell-center MS to a cell-edge MS is prohibited (2803). In this case, note that a cell-edge MS may be changed to a cell-center MS. If the number of cell-edge MSs has not reached the upper limit value (No in 2802), the BS allows both a change from a cell-center MS to a cell-edge MS and a change from a cell-edge MS to a cell-center MS (2804).

In addition, in FIG 28, the BS measures the duration time of the state in which the change from a cell-center MS to a cell-edge MS is prohibited (2805). If the duration time of the prohibition state has reached or exceeded a predetermined length (Yes in 2805), the RSRP threshold is decreased by a certain amount to make it difficult for an MS to be classified into a cell-edge MS as in the seventh example (2806). If the duration time of the prohibition state is shorter than a predetermined length (No in 2805), the RSRP threshold is increased by a certain amount (2807).

Whether or not the number of cell-edge MSs has reached the upper limit value may be determined, at MS classification timing, after the determination is made for all MSs connected to the BS if they are cell-edge MSs or cell-center MSs or after the determination is made for one or more MSs if they are cell-edge MSs or cell-center MSs.

This example allows each cell to control the number of cell-edge MSs based on the upper limit value of the number of cell-edge MSs notified by the high-order entity, thereby preventing the cell-edge MSs from being increased too much.

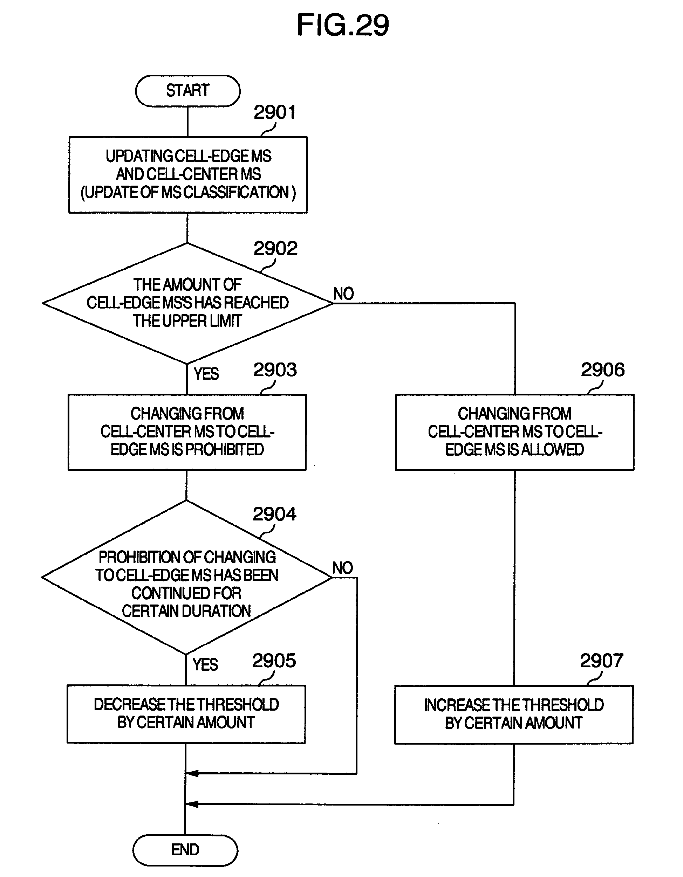

Although the RSRP threshold is increased in the example shown in FIG 28 if the duration time of the state in which the change from a cell-center MS to a cell-edge MS is prohibited is shorter than a predetermined length, it is also possible not to change the RSRP threshold during the period in which the change from a cell-center MS to a cell-edge MS is prohibited. FIG 29 is a flowchart showing an example of the procedure for use by a BS not to change the RSRP threshold if the duration time of the prohibition state is shorter than a predetermined length. In FIG 29, after the classification of MSs (2901), the BS determines whether or not the change from a cell-center MS to a cell-edge MS is to be prohibited based on whether or not the number of cell-edge MSs has reached the upper limit value (2902) in the same manner as in FIG 28. If the state is the prohibition state (2903) and if the duration time of the prohibition state has reached or exceeded a predetermined length (Yes in 2904), the RSRP threshold is decreased by a certain amount. If the state is the prohibition state but the duration time of the prohibition state is shorter than a predetermined length (No in 2904), the RSRP threshold is not changed. If the state is not the prohibition state (2906), the RSRP threshold is increased by a certain amount (2907).

In the example in FIG 29, if the state is not the prohibition state, the threshold is increased by a certain amount in order to return the RSRP threshold, which has been decreased during the duration time of the prohibition state that has reached or exceeded a predetermined length, to the initial value. And so, if the RSRP threshold has reached the initial value, the RSRP threshold need not be increased any more.

The control of the amount of cell-edge band during bandwidth partitioning and the control of the number of cell-edge MSs during the classification of MSs have been described above. Not only one of the control of the amount of cell-edge band and the control of the number of cell-edge MSs is used but also they are combined for use. The following describes an example.

### [Ninth example]

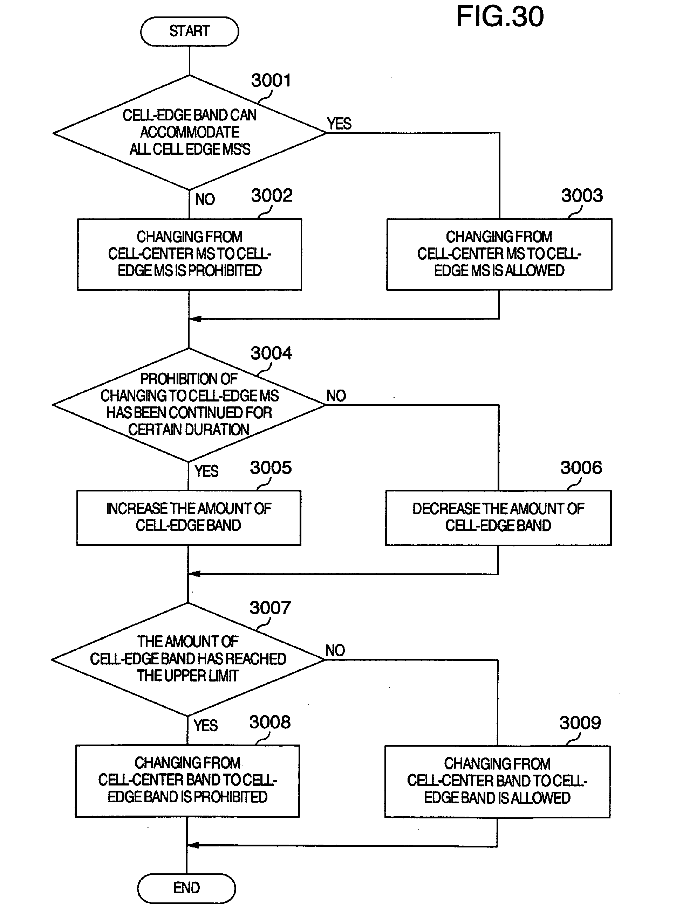

A ninth example of the present invention will be described below with reference to FIG 30. The ninth example is an example in which the control of the amount of cell-edge band and the control of the number of cell-edge MSs are combined. The ninth example may be applied to both the downlink and the uplink.

FIG 30 is a flowchart showing an example of the procedure for use by a BS to use a combination of the control of the amount of cell-edge band and the control of the number of cell-edge MSs. Referring to FIG 30, the number of cell-edge MSs is limited when the cell-edge band becomes insufficient and, if this limitation is applied for a predetermined period, the amount of cell-edge band is increased with a limitation on it.

In FIG 30, the BS first assigns frequency resources to cell-edge MSs in the cell-edge band and checks if the cell-edge band can accommodate all cell-edge MSs (3001). If the cell-edge band cannot accommodate all cell-edge MSs (No in 3001), the BS judges that there are too many cell-edge MSs and prohibits a change from a cell-center MS to a cell-edge MS (3002). By doing so, the number of cell-edge MSs is controlled. If the cell-edge band can accommodate all cell-edge MSs (Yes in 3001), the BS judges that there is a sufficient amount of cell-edge band for the number of cell-edge MSs and allows a change from a cell-center MS to a cell-edge MS (3003).

In addition, in FIG 30, the BS measures the duration time of the state in which a change from a cell-center MS to a cell-edge MS is prohibited (3004). If the duration time of the prohibition state has reached or exceeded a predetermined length (Yes in 3004), the BS increases the amount of cell-edge band (3005). If the duration time of the prohibition state is shorter than a predetermined length (No in 3004), the BS decreases the amount of cell-edge band (3006).
After that, if the amount of cell-edge band has reached a predetermined upper limit amount (Yes in 3007), a change from a cell-center band to a cell-edge band is prohibited (3008). In this case, note that a cell-edge band may be changed to a cell-center band. If the amount of cell-edge band has not reached the upper limit amount (No in 3007), the BS allows both a change from a cell-center band to a cell-edge band and a change from a cell-edge band to a cell-center band (3009).

If the duration time of the cell-center MS is shorter than a predetermined length in the example in FIG 30, the BS decreases the amount of cell-edge band but, during the period in which the change from a cell-center MS to a cell-edge MS is prohibited, the BS need not change the amount of cell-edge band.

Although limited by prohibiting the change from a cell-center MS to a cell-edge MS in the example in FIG 30, the number of cell-edge MSs may be limited also by changing the RSRP threshold as in the seventh example or by combining the prohibition of the change from a cell-center MS to a cell-edge MS and the change in the RSRP threshold as in the eighth example.

In FIG 30, if the state in which the amount of cell-edge band has reached the upper limit lasts long, the upper limit of the amount of cell-edge band may be too low for the number of connected MSs. In such a case, controlling the upper limit of the amount of cell-edge band according to the number of connected MSs, such as that shown in FIG 12, would increase the upper limit of the amount of cell-edge band of the cell and solve the problem of insufficiency in the cell-edge band. Alternatively, if the state in which the amount of cell-edge band has reached the upper limit lasts long, the BS may notify the high-order entity of this condition and, in response to the notification, the high-order entity may increase the upper limit of the amount of cell-edge band of the cell.

The embodiment and the examples described above prevent interference to the neighboring cells from being increased too much and improve the wireless usage efficiency in a cellular communication system.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A wireless communication method for communicating with one or more wireless communication devices (102,1803,1804) via a first base station device (101,1801) using a frequency resource composed of a plurality of subcarriers, comprising the steps of:
obtaining cell information related to a second cell of a second base station, said second cell being a communication range different from a first cell (1802) that is a communication range of said first base station (1801), said first cell including a first area (1805) and a second area (1806) that is farther from said first base station (1801) than the first area (1805);
changing a first resource to a second resource based on the cell information, said first resource assigned to the first area (1805) and composed of first subcarriers, said second resource assigned to the second area (1806) and composed of second subcarriers; and
making different transmit powers correspond respectively to the first resource and the second resource.

2. A wireless communication method according to claim 1,
further comprising the steps of:
monitoring the second resource assigned to the second area (1806); and
deciding whether or not the first resource should be changed to a resource to be assigned to the second area (1806) according to the monitoring result.

3. A wireless communication method according to claim 2,
further comprising the steps of:
if an amount of the second resource assigned to the second area (1806) is larger than a first value as a result of the monitoring, not changing the first resource to a resource to be assigned to the second area (1806) and, if the amount of the second resource is not larger than the first value, changing the first resource to a resource to be assigned to the second area (1086).

4. A wireless communication method according to claim 3,
further comprising the steps of:
monitoring the amount of the second resource assigned to the second area (1806);
if the amount of the second resource is larger than a second value smaller than the first value as a result of the monitoring, assigning the second resource to the first area (1805); and
if the amount of the second resource is smaller than the second value as a result of the monitoring, prohibiting the assignment of the second resource to the first area (1805).

5. A wireless communication method according to claim 1,
wherein the step of changing a first resource to a second resource is configured to assign a first resource, which neighbors to the second resource already assigned to the second area (1806), to the second area (1806).

6. A wireless communication method according to claim 1,
wherein the step of making different transmit powers correspond to the first resource and the second resource is configured to make a transmit power, higher than the transmit power to be made to correspond to the first resource, correspond to the second resource.

7. A wireless communication method according to claim 1,
wherein the cell information is Relative Narrowband Tx Power.

8. A wireless communication method according to claim 1,
wherein the cell information is UL High Interference Indication.

9. A wireless communication method according to claim 1,
wherein the second area (1806) is an area nearer to said second base station than the first area (1805).

10. A wireless communication method for communicating with one or more wireless communication devices (102, 1803,1804) via a first base station device (101,1801) using a frequency resource composed of a plurality of subcarriers, comprising the steps of:
obtaining cell information related to a second cell of a second base station, said second cell being a communication range different from a first cell (1802) that is a communication range of said first base station (1801), said first cell (1802) including a first area (1805) and a second area (1806) that is farther from said first base station (1801) than the first area (1805);
assigning a resource composed of one or more of the subcarriers to the first area (1805) and the second area (1806);
deciding whether or not the resource, assigned to the first area (1805), should be assigned to the second area (1806) based on the cell information and a number of the wireless communication devices (1804) included in the second area (1806);
changing the assignment of resources based on the decision result; and
making different transmit powers respectively to the first resource and the second resource.

11. A communication system comprising:
a first station (1801) providing a first cell (1802) for communicating with a third station along with a frequency resource composed of a plurality of subcarriers; and
a second station communicating with the third station; wherein the first station (1801) includes
a resource assignment block (706) that assigns a frequency resource to a first area (1805) and a second area (1806) both of which are included in the first cell (1802) , said second area (1806) being nearer from said first station (1801) than the first area (1805);
a monitoring block that monitors the third station (1804) belonging to the second area (1806);
a change control block that controls whether or not the third station (1803), which belongs to the first area (1805), is to be changed to belong to the second area (1806) based on the monitoring result; and
a power setting block (705) that sets different transmit power controls according to whether the third station is in the first area (1805) or in the second area (1806).

12. A communication system according to claim 11 wherein
said monitoring block monitors a number of the third stations (1804) belonging to the second area (1806), and
said change control block prohibits the change from the first area (1805) to the second area (1806) if the number of the third stations (1804) is larger than a predetermined value as a result of the monitoring.

13. A communication system according to claim 12 wherein
if the change from the first area (1805) to the second area (1806) is prohibited by said change control block,
said monitoring block further monitors an amount of resources assigned to the second area (1806), and
said change control block controls whether or not the assignment of frequency resources, assigned to the areas in the first cell (1802), is to be changed from the first area (1805) to the second area (1806) based on the monitoring result of the amount of resources monitored by said monitoring block.

14. A communication system according to claim 13 wherein
said change control block prohibits the change from the first area (1805) to the second area (1806) if the amount of resources is larger than a predetermined value as a result of the monitoring by said monitoring block, and
changes the assignment of resources from the first area (1805) to the second area (1806) if the amount of resources is not larger than the predetermined value.

15. A communication system according to claim 14 wherein
said change control block changes the assignment of a first resource, which neighbors to the second resource already assigned to the second area (1806), to the second area (1806).
